# EUROPEAN PATENT APPLICATION

(11) **EP 4 845 145 A1**
(43) Date of publication of application: **25.11.2026**
(21) Application number: 26180734.1
(22) Date of filing: 22.05.2026
(51) Int. Cl.: H04N 9/31

(54) **A LASER-PHOSPHOR BASED LIGHT GENERATOR THAT INCLUDES A PHOSPHOR WHEEL, A COLOR WHEEL, AND SPOKE-BASED CONTROL AND INTEGRATOR DEVICES THEREFOR**

(30) Priority: 23.05.2025 US 202563811242 P; 14.04.2026 US 202619647030
(71) Applicant: Christie Digital Systems USA, Inc., Cypress, CA 90630 (US)
(72) Inventor: PETTITT, Gregory S., Durant, 74701 (US); JACKSON, John David, Knoxville, 37934 (US)
(74) Representative: DREISS Patentanwälte PartG mbB

(57) **Abstract**

A light generation device includes a pump laser, a phosphor wheel, a color wheel, a blue laser, a controller, and an integrator. The phosphor wheel includes one or more phosphors configured to emit light when illuminated by the pump laser. The color wheel includes alternating color segments arranged to receive the light from the phosphor wheel in an illumination region and to filter the light from the phosphor wheel to output green light and red light. The blue laser generates blue light. The controller selectively controls the pump laser and the blue laser based on a position of a spoke between adjacent color segments relative to the illumination region; the control includes: turning the pump laser off and the blue laser on as the spoke approaches the illumination region; and turning the pump laser on and the blue laser off when the spoke is no longer in the illumination region.

## Description

### CROSS-REFERENCE TO RELATED APPLICATIONS

The present specification claims priority from United States Provisional Patent Application No., 63/811,242, filed on May 23, 2025, and United States Patent Application No.: 19/647030, filed April 14, 2026, both of which are incorporated herein by reference.

### FIELD

The specification relates generally to projectors, and specifically to a laser-phosphor based light generator that includes a phosphor wheel, a color wheel, and spoke-based control and integrator devices therefor.

### BACKGROUND

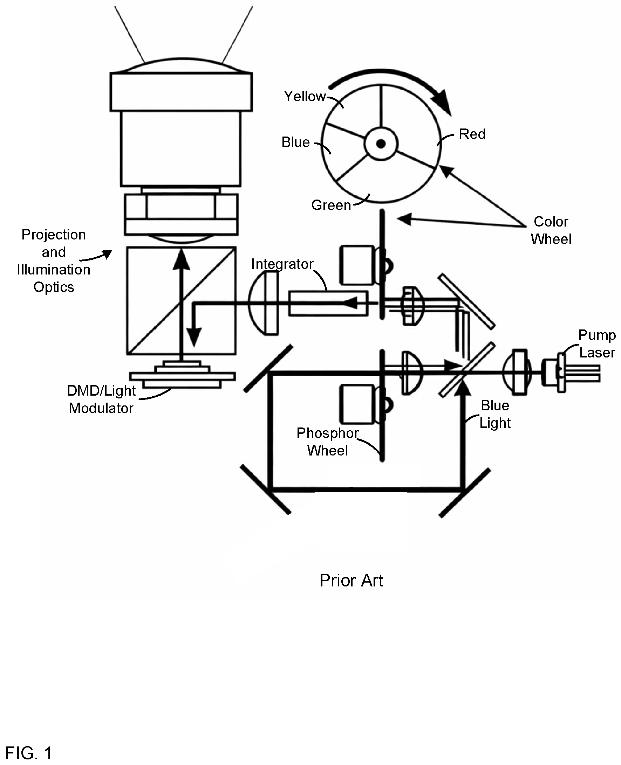

High lumen 1DLP (single-chip Digital Light Processing) projection systems utilize Laser/Phosphor (LaPh) illumination to achieve high brightness. 1DLP projection systems are understood to include one digital micromirror device (DMD). The most common 1DLP projectors utilize a phosphor wheel and a color wheel combination to create the color projected onto a screen. FIG. 1 shows an example diagram of such a prior art illumination and projection system where a color wheel includes a red, green and blue color segments as well as a yellow (Y) and/or transparent segment. The color wheel is shown in profile, relative to the remaining components, and a front view of the color wheel is also shown to better show the positions of the color segments.

While the prior art illumination and projection system of FIG. 1 is not described in detail, it is understood that light generated by the illumination system passes through an integrator and/or integrator rod, which illuminates a DMD and/or light modulator, and an image formed by the DMD, and the like, is projected. The illumination of the DMD, and the like, as well as the projection, occurs via combined projection and illumination optics. Optical paths of light in the illumination system of FIG. 1 are depicted as arrows. Furthermore, while not all components are labelled, it is understood that the illumination system of FIG. 1 includes any suitable combination of mirrors, dichroics, lenses, and the like, to facilitate directing light therethrough.

In particular, in the illumination system of FIG. 1, there is a bank of (e.g., blue) pump laser diodes which illuminate a phosphor wheel. While not depicted, the phosphor wheel includes a phosphor section and an open section in which the blue light can pass through the phosphor wheel and reflect through three mirrors and be combined with the output of the phosphor wheel. This light then passes to the color wheel which creates the R, G, B and Y colors in a time sequence.

The color transitions in the color wheel results in mixed colors: for example, the time between the green and blue segment colors results in a cyan color, and similarly, other combinations of segments result in other cross colors (e.g. colors that are not red, green, or blue). Hence, such a prior art system generates many different colors and requires a multi-primary color processing scheme to re-capture all the available light for maximum brightness. The more time spent generating colors beyond the primary colors of R, G, and B the darker these primary colors become and the more color deviations become visible.

The speed of the color wheel and the number of color sequences on the wheel further determines how much light beyond just R, G, and B is generated. As stated earlier, each transition between two colors will generate this light; this results in a trade-off between color cycle rate and the amount of multi-primary color.

Current projection systems rotate an RGB and/or RGBY color wheel at 2x, 3x or 4x the frame rate, (color wheel rate factor). The colors could be sub-divided, but this again results in additional multi-primary colors. A highest possible color wheel rate factor is about 8x in these prior art systems, which is not high enough to eliminate color breakup.

While solid state light sources or multiple phosphor wheels may be used to eliminate color break-up artifacts, these systems have resulted in lowered peak brightness, and/or complexity and higher cost.

Furthermore, such systems may have challenges in integrating light from light sources in a compact manner.

### SUMMARY

A first aspect of the present specification provides a device comprising: a pump laser; a phosphor wheel comprising one or more phosphors that emit light when illuminated by the pump laser; a color wheel comprising alternating color segments of a first color and a second color, wherein the color wheel is arranged to receive the light from the phosphor wheel in an illumination region through which the alternating color segments rotate, wherein the alternating color segments of the first color and the second color respectively filter the light from the phosphor wheel to respectively output green light and red light; a blue laser configured to generate blue light; a controller configured to: turn the pump laser off and the blue laser on as a spoke, joining a first color segment and a second color segment of the color wheel, approaches the illumination region; and turn the pump laser on and the blue laser off when the spoke is no longer in the illumination region; and an integrator configured to receive and integrate the green light, the red light and the blue light.

At the device of the first aspect, the phosphor wheel may comprise alternating phosphor segments, of different respective phosphors, that emit at different wavelengths when illuminated by the pump laser, and the light emitted by the alternating phosphor segments may comprise first light and second light of the different wavelengths, wherein the color wheel may be arranged to receive the first light and the second light in the illumination region through which the alternating color segments rotate, and wherein the alternating color segments of the first color and the second color may respectively filter the first light and the second light to respectively output the green light and the red light.

The device of the first aspect may further comprise one or more further lasers configured to generate one or more of respective red light and respective green light, wherein the first color and the second color of the color wheel may respectively comprise green and red, wherein the integrator may be configured to receive and integrate the green light, the red light, the blue light, and one or more of the respective red light and the respective green light, and wherein the controller may be further configured to: control the one or more further lasers to generate the respective red light when the red light is being output by the color wheel; and control the one or more further lasers to generate the respective green light when the green light is being output by the color wheel. At some of these examples, the integrator may include a first input face, a second input face about perpendicular to the first input face, and an output face disposed at an end of the integrator opposite an end at which the first and second input faces are located, wherein the first input face may be arranged to receive the green light and the red light from the color wheel, and the second input face may be arranged to receive the blue light, the respective red light and the respective green light from the further laser, and wherein the integrator may be further configured to direct the green light, the red light, the blue light, the respective red light and the respective green light towards the output face.

At the device of the first aspect, the first color and the second color of the color wheel may respectively comprise cyan and magenta, wherein the color wheel may be further arranged to receive the blue light, and the light from the phosphor wheel in the illumination region through which cyan segments and magenta segments rotate, wherein the cyan segments filter the light from the phosphor wheel to output the green light, the magenta segments filter the light from the phosphor wheel to output the red light, and the cyan segments and the magenta segments are both about transparent to the blue light.

At the device of the first aspect, the controller may be further configured to: control one or more respective time periods that the blue laser and the pump laser are on and off to control one or more respective intensities of the blue light, the green light and the red light.

At the device of the first aspect, the controller may be further configured to: control one or more respective intensities of one or more of the blue laser and the pump laser to control one or more respective intensities of the blue light, the green light and the red light.

At the device of the first aspect, the controller may be further configured to: control one or more respective intensities of one or more of the blue laser and the pump laser to control a white point of light output by a projection system that receives the blue light, the green light and the red light.

At the device of the first aspect, the controller may be further configured to: turn the pump laser off and the blue laser on as the illumination region approaches the spoke joining a first color segment and a second color segment; and maintain the pump laser off and maintain the blue laser on for a duration that is longer than a spoke transition time associated with the spoke passing through the illumination region.

At the device of the first aspect, the controller may be further configured to: turn the pump laser on as a first color segment or a second color segment is in the illumination region, and wherein the blue laser is off while the pump laser is on.

At the device of the first aspect, the phosphor wheel may comprise alternating phosphor segments, of different respective phosphors, that emit at different wavelengths when illuminated by the pump laser, and the light emitted by the alternating phosphor segments may comprise first light and second light of the different wavelengths, and wherein respective rotation of the phosphor wheel and the color wheel are coordinated such that the first light emitted by the phosphor wheel passes through first color segments, and the second light emitted by the phosphor wheel passes through second color segments.

The device of the first aspect may further comprise: a spatial light modulator; and optics arranged to direct the blue light, the green light and the red light exiting the integrator to illuminate the spatial light modulator.

At the device of the first aspect, the blue laser may emit at a wavelength different from that of the pump laser.

At the device of the first aspect, the pump laser may emit at about 455 nm.

At the device of the first aspect, the blue laser may emit at about 465 nm or at about 455 nm.

At the device of the first aspect, the color wheel may be rotated at a speed such that a color cycle rate of at least 15x is achieved.

At the device of the first aspect, the color wheel may be rotated above a threshold speed such that color breakup is reduced or eliminated as compared to speeds below the threshold speed.

At the device of the first aspect, first color segments and second color segments of the color wheel may be about equal in size.

At the device of the first aspect, first color segments and second color segments of the color wheel may be unequal in size.

A second aspect of the present specification further provides an integrator device comprising: a plurality of integrators arranged adjacent to each other, each integrator comprising a respective input face and a respective output face, wherein the plurality of integrators are arranged such that the respective output faces collectively define a composite output face; and a fly's eye integrator positioned to receive respective integrated light from the respective output faces, wherein the plurality of integrators are configured to receive respective incident light from different light sources at a respective input face, integrate the respective incident light and to provide the respective integrated light to the fly's eye integrator such that the fly's eye integrator outputs homogenized light suitable for illuminating a spatial light modulator.

At the integrator device of the second aspect, the plurality of integrators may comprise at least two integrators arranged side-by-side in a lateral array.

At the integrator device of the second aspect, the plurality of integrators may comprise at least two integrators arranged adjacent each other, each having substantially parallel longitudinal axes.

At the integrator device of the second aspect, the respective input face of an outermost integrator, of the plurality of integrators, may be located along a respective outer-facing longitudinal side of the outermost integrator, wherein the outermost integrator may further comprise a chamfer at an opposite longitudinal side configured to direct light received at the respective input face of an outermost integrator towards the respective output face of the outermost integrator.

At the integrator device of the second aspect, the plurality of integrators may comprise four integrators, wherein at least two of the four integrators may comprise respective input faces that are staggered relative to one another along a longitudinal direction of the plurality of integrators, and may be about parallel to the longitudinal direction, and wherein at least two of the four integrators may comprise respective chamfers opposite the respective input faces configured to reflect light received at the respective input faces towards respective output faces.

At the integrator device of the second aspect, each integrator, of the plurality of integrators, may comprise a respective elongated integrator rod configured to homogenize light via internal reflections.

At the integrator device of the second aspect, the plurality of integrators may be configured to receive light from at least: a first optical path corresponding to phosphor-generated light; and a second optical path corresponding to laser-generated light.

At the integrator device of the second aspect, the fly's eye integrator may comprise: at least one array of lenslets or facets configured to further homogenize angular and spatial distribution of the light received from the composite output face.

At the integrator device of the second aspect, the fly's eye integrator may be positioned such that respective light from each of the plurality of integrators overlaps within the fly's eye integrator.

At the integrator device of the second aspect, a composite output aperture formed by the composite output face may be dimensioned to match an input aperture of the fly's eye integrator.

At the integrator device of the second aspect, an illumination uniformity at an output of the fly's eye may be substantially independent of which of the plurality of integrators is actively receiving light at a given time.

The integrator device the second aspect may further comprise at least one optical element disposed between the plurality of integrators and the fly's eye integrator, wherein the at least one optical element may be configured to collimate light from the plurality of integrators into the fly's eye integrator.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts an example of a laser-phosphor based light generator, according to the prior art.
FIG. 2 depicts a graph of perceptibility of color break-up in projected images as a color wheel rate increases, according to non-limiting examples.
FIG. 3 depicts a schematic diagram of a laser-phosphor based light generator that includes a phosphor wheel, a red-green color wheel, and spoke-based control, according to non-limiting examples.
FIG. 4 depicts a schematic diagram of another laser-phosphor based light generator that includes a phosphor wheel, a red-green color wheel, and spoke-based control, according to non-limiting examples.
FIG. 5 is a block diagram illustrating arrangement of components in a laser-phosphor based light generator with spoke-based control, according to non-limiting examples.
FIG. 6 is a timing diagram corresponding to the laser-phosphor based light generator of FIG. 3, illustrating synchronization of light sources with color wheel segments, according to non-limiting examples.
FIG. 7 is a graph illustrating segment size versus color cycle rate for different laser-phosphor based light generator configurations, according to non-limiting examples.
FIG. 8 depicts a schematic diagram of a laser-phosphor based light generator that includes a phosphor wheel, a cyan-magenta color wheel, and spoke-based control, according to non-limiting examples.
FIG. 9 is a timing diagram corresponding to the laser-phosphor based light generator of FIG. 8, illustrating synchronization of light sources with color wheel segments, according to non-limiting examples.
FIG. 10 is a graph illustrating cyan and magenta color wheel transmission responses and the emission spectra of different phosphor materials and blue laser, according to non-limiting examples.
FIG. 11 is a graph illustrating emission spectra of different phosphor materials, according to non-limiting examples.
FIG. 12 is a graph illustrating cyan and magenta color wheel transmission responses, according to non-limiting examples.
FIG. 13 is a graph illustrating relationships between cyan and magenta color wheel transmission responses and red light, green light, and blue (e.g., laser) light spectra, according to non-limiting examples.
FIG. 14 is a graph illustrating spectral relationships among phosphor emissions, filtered light, and blue (e.g., laser) light, according to non-limiting examples.
FIG. 15 is a schematic diagram of another example of a laser-phosphor based light generator with spoke-based control, according to non-limiting examples.
FIG. 16 is a schematic diagram of an additional example of a laser-phosphor based light generator with spoke-based control, according to non-limiting examples.
FIG. 17 is a schematic diagram of a further example of a laser-phosphor based light generator with spoke-based control, according to non-limiting examples.
FIG. 18 is a schematic diagram of a further example of a laser-phosphor based light generator with spoke-based control, according to non-limiting examples.
FIG. 19 is a schematic diagram of another illumination laser-phosphor based light generator with spoke-based control, according to non-limiting examples.
FIG. 20 is a schematic diagram of another illumination laser-phosphor based light generator with spoke-based control, according to non-limiting examples.
FIG. 21 is a block diagram illustrating an arrangement of components in a laser-phosphor based light generator with spoke-based control, according to non-limiting examples.
FIG. 22 is a block diagram illustrating another arrangement of components in a laser-phosphor based light generator with spoke-based control, according to non-limiting examples.
FIG. 23 is a block diagram illustrating another arrangement of components in a laser-phosphor based light generator with spoke-based control, according to non-limiting examples.
FIG. 24 is a block diagram illustrating another arrangement of components in a laser-phosphor based light generator with spoke-based control, according to non-limiting examples.
FIG. 25A is a schematic diagram of an example integration system including adjacent integrators and a fly's eye integrator, according to non-limiting examples.
FIG. 25B is a schematic diagram of another example integration system including adjacent integrators and a fly's eye integrator, according to non-limiting examples.
FIG. 25C is a schematic diagram of an example integration device including three integrators arranged adjacent each other and configured to provide light to a fly's eye integrator, according to non-limiting examples.
FIG. 25D is a schematic diagram of an example integration device including four integrators arranged adjacent each other, two of the integrators including staggered input faces and configured to provide light to a fly's eye integrator, according to non-limiting examples.

### DETAILED DESCRIPTION

Eliminating color break-up in LaPh light generators may occur by controlling the red, green and blue color cycle rates to be as high as possible while reducing and/or eliminating the secondary colors that usually arise from the color transition regions (or spokes as commonly referenced). Furthermore, the sequential nature of 1DLP systems can result in an artifact known as "color break-up". Color break-up is easily seen in images that have white on black features. It is an artifact in which viewers perceive rainbow-like flashes or color separation, particularly during fast motion or when shifting their gaze quickly. This artifact can be mitigated by flashing the sequence of colors more quickly. This can be accomplished by increasing the number of repeated color sequences (e.g., RGB (e.g. red, green, blue) to RGBRGB), and/or speeding up the rotation rate of a color wheel. A color cycle is the number of times the repeated sequence of colors is shown over a frame time. In studies, it has been determined that a color cycle rate of 15x to around 20x (e.g., per frame) minimizes the perceptible color break-up for most viewers.

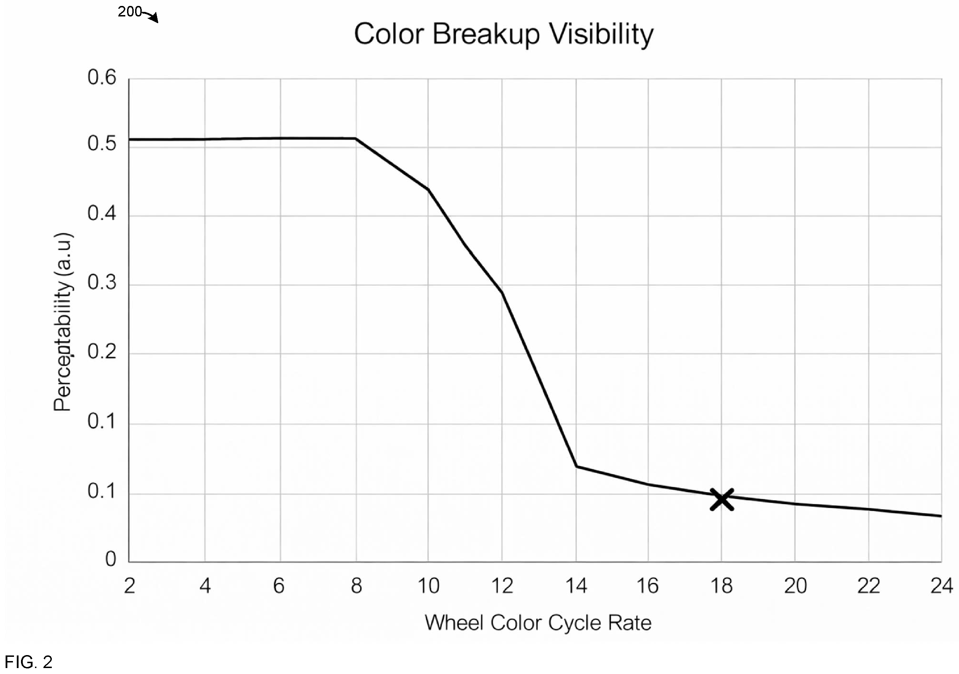

For example, attention is directed to FIG. 2, which depicts a graph 200 of color break-up perceptibility as a function of color wheel cycle rate (e.g., how many times per second a color wheel in a single-chip projector completes a full RGB color cycle, and the like). As understood from FIG. 2, above about 15x, color break-up perceptibility is minimized, with an "X" at 18x indicating a heuristically determined rate that is between 15x to around 20x.

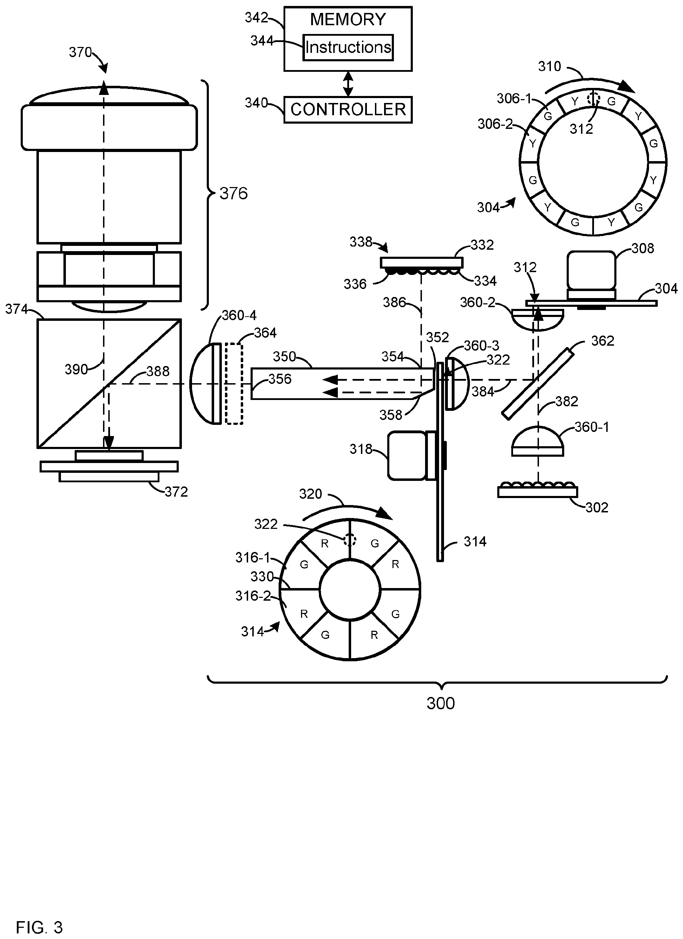

Attention is next directed to FIG. 3 which depicts a laser-phosphor based light generator 300 comprising:
- a pump laser 302, which may include, but is not limited to a bank of blue lasers configured to emit light (e.g., pump light) at about 455 nm, or any other suitable wavelength (e.g., about 465 nm, and the like).
- a phosphor wheel 304 comprising alternating phosphor segments 306-1, 306-2 (e.g., interchangeably referred to as the alternating phosphor segments 306 and/or a phosphor segment; this convention will be used elsewhere in the present specification) that emit first light and second light at different wavelengths when respectively illuminated by the pump laser 302.

The phosphor wheel 304 is depicted from a side view relative to other components of the light generator 300, and also in a front view to show details of the alternating phosphor segments 306, which, as depicted, include alternating green and/or yellow-green (e.g., "G") and yellow (e.g., "Y") phosphor segments 306 which respectively emit green and yellow light. Such phosphor segments 306 may be formed from any suitable material, including, but not limited to, for the yellow-green phosphor segments 306, lutetium aluminum garnet, and, for the yellow phosphor segments 306, yttrium aluminum garnet doped with cerium. However, other suitable types of phosphor materials will occur to a person of skill in the art, and indeed, any suitable phosphor material is within the scope of the present specification.

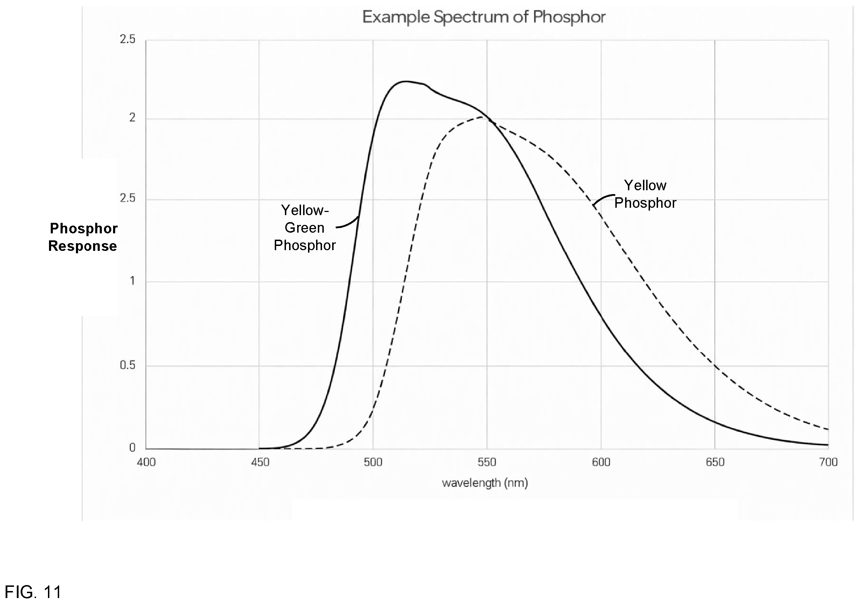

As depicted, the phosphor wheel 304 is attached to a motor 308 (e.g., a high speed brushless 3 phase DC (BLDC) motors, and the like ), which rotates the phosphor wheel 304 (e.g., in a direction as indicated by an arrow 310), such that the alternating phosphor segments 306 rotate through a phosphor wheel illumination region 312 illuminated by light from the pump laser 302. The phosphor wheel illumination region 312 is shown in the front view of the phosphor wheel 304, and indicated at the side view of the phosphor wheel 304 (e.g., relative to other components of the light generator 300), and is understood to be in a fixed position through which the alternating phosphor segments 306 rotate. As each alternating phosphor segments 306 is illuminated by light from the pump laser 302 in the phosphor wheel illumination region 312, each phosphor segment 306 emits light of a respective color, for example yellow and yellow-green (e.g., see FIG. 11). Put another way, the phosphor wheel illumination region 312 comprises a region of the phosphor wheel 304 where light from the pump laser 302 impinges, and the yellow-green and yellow phosphor segments 306 are understood to rotate through this phosphor wheel illumination region 312.
- a color wheel 314 comprising alternating color segments 316-1, 316-2 (e.g., alternating color segments 316 and/or a color segment 316) of a first color and a second color. The color wheel 314 is depicted from a side view relative to other components of the light generator 300, and also in a front view to show details of the alternating color segments 316, which, as depicted, include alternating green (e.g., "G", a first color) and red (e.g., "R", a second color) segments 316. In some examples, a number of yellow-green emitting phosphor segments 306 corresponds to a number of green segments 316, and a number of yellow emitting phosphor segments 306 corresponds to a number of red segments 316, though any suitable respective number of segments 306, 316 is within the scope of the present specification. Indeed, as depicted, the numbers of segments 306, 316 are different.

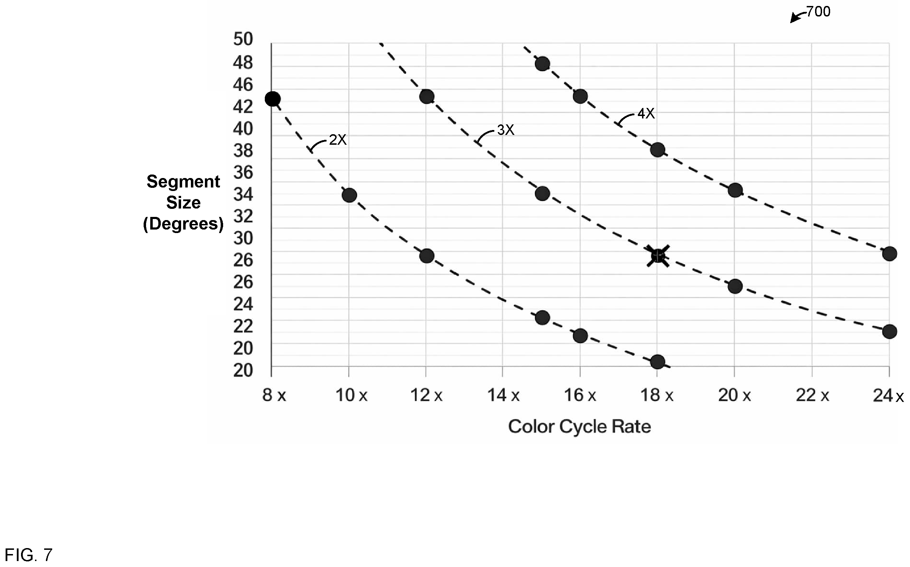

Indeed, number of respective segments 306, 316 may be used to control a color cycle rate in conjunction with a color wheel rate, as described in more detail with respect to FIG. 7. The relative size of the respective segments 306, 316 may be varied as well. Indeed, relative angular sizes of the color segments 316 may be varied relative to each other to achieve given optical and timing characteristics, and/or relative angular sizes of the phosphor segments 306 may be varied relative to each other to achieve given optical and timing characteristics, and/or relative angular size of the color segments 316 relative to angular size of the phosphor segments 306 may be varied to achieve given optical and timing characteristics.

In particular, first color segments 316 and second color segments 316 of the color wheel 314 may be about equal in size, or first color segments 316 and second color segments 316 of the color wheel 314 may be unequal in size.

Furthermore, first phosphor segments 306 and second phosphor segments 306 of the phosphor wheel 304 may be about equal in size, or first phosphor segments 306 and second phosphor segments 306 of the phosphor wheel 304 may be unequal in size.

Furthermore, in some examples, respective sizes (e.g., angular sizes) of segments 306, 316 and respective number of segments 306, 316 may be matched such that respective sizes and respective numbers of the segments 306, 316 are the same.

It is yet further understood that the wheels 304, 314 may be of different sizes and/or diameters, or the wheels 304, 314 may be of about a same size and/or a same diameter.

As depicted, the color wheel 314 is attached to a motor 318 (e.g., a high speed brushless 3 phase DC (BLDC) motors, and the like), which rotates the color wheel 314 (e.g., in a direction indicated by an arrow 320), such that the alternating color segments 316 rotate through a color wheel illumination region 322 illuminated by light emitted by the phosphor wheel 304, as will be described herein. While as depicted, the color wheel 314 is being rotated in a same direction as the phosphor wheel 304, in other examples, the color wheel 314 and the phosphor wheel 304 may be rotated in opposite directions. The color wheel illumination region 322 is shown in the front view of the color wheel 314, and indicated at the side view of the color wheel 314 (e.g., relative to other components of the light generator 300), and is understood to be in a fixed position through which the alternating color segments 316 rotate. As each alternating color segment 316 is illuminated by respective light emitted by the phosphor wheel 304 in the color wheel illumination region 322, each color segment 316 may transform and/or filter the light emitted by the phosphor wheel 304 into a respective color as the light emitted by the phosphor wheel 304 passes through a respective color segment 316. Hence, the color wheel illumination region 322 comprises a region of the color wheel 314 where light from the phosphor wheel 304 impinges, and the green and red segments 316 are understood to rotate through the color wheel illumination region 322.

Put another way, the color wheel 314 is arranged to receive the first light (e.g., yellow-green light) and the second light (e.g., yellow light) emitted by the phosphor wheel 304 in the phosphor wheel illumination region 312 through which the alternating color segments 316 rotate, and the alternating color segments 316 of the first color and the second color respectively filter the first light and the second light to respectively output green light and red light.

For example, rotation of the phosphor wheel 304 and the color wheel 314 may be coordinated such that when yellow-green light is being emitted by the phosphor wheel 304, such that yellow-green light passes through a green color segment 316 of the color wheel 314, and transform the yellow-green light being emitted by the phosphor wheel 304 into green light. Similarly, rotation of the phosphor wheel 304 and the color wheel 314 may be coordinated such that when yellow light is being emitted by the phosphor wheel 304 (which is understood to include a red light portion), such that yellow light passes through a red color segment 316 of the color wheel 314 so that the yellow light that passes through the red color segment 316 is transformed into red light.
- a blue laser 332 configured to generate blue light. For example, as depicted the blue laser 332 may comprise a bank of blue lasers 334 that emit light at about 465 nm, or, alternatively, at about 455 nm. As depicted, the blue laser 332 may optionally include a bank 336 of lasers 334 that emit light at one or more others color, such as red or green, at any suitable wavelength. Indeed, the blue laser 332 may be referred to being a component of a further laser 338 (e.g., "further" relative to the pump laser 302), configured to generate the blue light and one or more of respective red light and respective green light, which may be used to enhance the red light and/or green light generated by the combination of the phosphor wheel 304 and the color wheel 314.

For example, when present, the respective red light and/or the respective green light emitted by the further laser 338 may be used to increase a brightness and/or a color gamut of the red light and/or green light generated by the combination of the phosphor wheel 304 and the color wheel 314, and/or to achieve a given white point (e.g., presuming the red, green and blue light output by the light generator 300 are combined). Regardless, the blue laser 332 is understood to provide blue light for the light generator 300, while the combination of the phosphor wheel 304 and the color wheel 314 provide red and green light, while the optional further laser 338 may be used to enhance the red and/or green light generated using the phosphor wheel 304 and the color wheel 314. While the blue laser 332 is depicted as a component of the further laser 338, in other examples the blue laser 332 and the further laser 338 may be separate components, and/or the further laser 338 may be provided as two separate lasers, a first configured to generate green light and a second laser configured to generate red light.

Furthermore, it is understood that transmission properties of the color segments 316 may be selected by measuring and/or obtaining the spectral properties of the phosphor segments 306 (e.g., via provided spectral properties from a manufacturer of the phosphors used in the phosphor segments 306), and determining desired output from the color segments 316. For example, such a desired output may include determining a desired color gamut and/or white point from a combination of the red light and the green light generated by the wheels 304, 314, and the blue light from the blue laser 332 and, optionally, red light and/or green light from the further laser 338. Once such factors are determined, the transmission properties of the color segments 316 may be selected in combination with the spectral properties of the blue laser 332 and, optionally, red light and/or green light from the further laser 338, to determine which red and green color segments 316 to select (e.g., from a manufacturer). Alternatively, or in addition, once such factors are determined, the transmission properties of the color segments 316 may be selected in combination with the spectral properties of the blue laser 332 to determine which red and green color segments 316 to select that gets close to such factors, and red light and/or green light from the further laser 338 may be used to get closer to such factors.
- a controller 340 (e.g., one or more processors) configured to: turn the pump laser 302 off and the blue laser 332 on as a spoke 330, joining a first color segment 316-1 and a second color segment 316-2 of the color wheel 314, approaches the color wheel illumination region 322; and turn the pump laser 302 on and the blue laser 332 off when the spoke 330 is no longer in the color wheel illumination region 322.

As used herein, a spoke 330 is considered to be "approaching" the color wheel illumination region 322 when the spoke 330 has not yet entered the color wheel illumination region 322 and is separated from a boundary of the illumination region by an angular displacement greater than zero and less than or equal to a predetermined threshold angular displacement measured in the direction of rotation of the color wheel 314. In some examples, the predetermined angular displacement corresponds to a time interval required for the spoke 330 to reach the color wheel illumination region 322 at a current rotational speed of the color wheel 314. In particular, it is understood that a threshold angular displacement may depend on a spot size of light in the color wheel illumination region 322 and/or a size of the color wheel illumination region 322, a rotational speed of the color wheel 314, a diameter of the color wheel 314, and/or jitter in maintaining synchronization with the phosphor wheel 304. As such, a predetermined threshold angular displacement may be determined heuristically, but may be on the order of a few degrees, though any suitable predetermined threshold angular displacement is within the scope of the present specification.

Similarly, a spoke 330 is considered to be in the color wheel illumination region 322 when at least a portion of the spoke 330 overlaps with the color wheel illumination region 322 and/or when any part of the spoke 330 intersects the color wheel illumination region 322.

Similarly, a spoke 330 is considered to be no longer in the color wheel illumination region 322 when the spoke 330 has fully exited the color wheel illumination region 322 and/or is separated from a boundary of the color wheel illumination region 322 by an angular displacement greater than zero in the direction of rotation of the color wheel 314. Indeed, the angular displacement greater than zero may also be determined heuristically according to factors similar to those used to determine the aforementioned predetermined threshold angular displacement, and again may be on the order of a few degrees, though any suitable displacement greater than zero is within the scope of the present specification.

However, as will be described herein, the controller 340 turning the pump laser 302 on and the blue laser 332 off when the spoke 330 is no longer in the color wheel illumination region 322 may occur when the spoke 330 leaves the color wheel illumination region 322 and some time passes, to extend a time period of the blue laser 332 being on. In general, however, the controller 340 turns the pump laser 302 on and the blue laser 332 off before a next spoke 330 approaches the color wheel illumination region 322.

Furthermore, the controller 340 may be configured to determine when a spoke 330 is approaching, entering, and/or within the color wheel illumination region 322 and/or is no longer within the color wheel illumination region 322, based on one or more of a rotational position sensor of the color wheel 314, an encoder of the motor 318, a timing model based on color wheel speed, feedback from the motor 318, amongst other possibilities.

In this manner, the pump laser 302 is off when a spoke 330 is in the color wheel illumination region 322 so that light of a particular color generated by the phosphor wheel 304 does not pass through two adjacent color segments 316 of different colors, and the blue laser 332 is turned on to generate blue light in this time period. Conversely, the pump laser 302 is on when a spoke 330 is not in the color wheel illumination region 322 so that light of a particular color generated by the phosphor wheel 304 passes through one color segment 316, and the blue laser 332 is turned off in this time period. Indeed, as will be explained, the light generator 300 is generally configured to sequentially output red, green and blue light, one at a time (e.g., so that only of red, green and blue light is being output at any given time), to sequentially illuminate a light modulator of a projection system. While not depicted, the controller 340 is understood to be communicatively coupled with the motors 308, 318, and the lasers 302, 332 to control rotation of the wheels 304, 314, and when the lasers 302, 332 are on and off. Indeed, as depicted, the controller 340 is communicatively coupled with a memory 342 (e.g., a non-transitory computer-readable storage medium) having stored thereon program instructions 344 that, when executed by the controller 340, causes the controller 340 to perform a set of operations as described herein.
- an integrator 350 (e.g., an integrator rod) configured to receive and integrate, and/or blend, the green light, the red light and the blue light (e.g., though each of the green light, the red light and the blue light may be provided in a sequence and hence it is understood that the integrator 350 integrates and/or blends whatever light is received at an input face thereof). The term "integrator", as used herein, may refer to an optical component configured to spatially and/or angularly combine and redistribute incident light to produce a more uniform illumination profile. As depicted, the integrator 350 includes a first input face 352, a second input face 354 about perpendicular to the first input face 352, and an output face 356 disposed at an end of the integrator 350 opposite an end at which the first input face 352 and the second input face 354 are located. In general, the first input face 352 is arranged to receive the green light, the red light from the color wheel 314, and the second input face 354 is arranged to receive the blue light from the blue laser 332, and optionally, any respective red light and/or respective green light from the further laser 338. The integrator 350 is further configured to direct the green light, the red light, the blue light, and, optionally, the respective red light and/or the respective green light towards the output face 356. For the green light and the red light from the color wheel 314, the first input face 352 is arranged so that the green light and the red light from the color wheel 314 is directed towards the output face 356. For the blue light from the blue laser 332 (and optionally the respective red and/or respective green light from the further laser 338), the integrator 350 includes a chamfer 358 at a side of the integrator 350 opposite the second input face 354, the chamfer 358 being at any suitable angle, to achieve total internal reflection, such that light impinging on the chamfer 358, is reflected back through the integrator 350, towards sidewalls thereof and/or towards the output face 356. However, ideally, the chamfer 358 may be at about 45° so that light reflected by the chamfer 358 is reflected towards the output face 356 (e.g., assuming an index of refraction of the material of the integrator 350 is at least about 1.42). The chamfer 358 is configured to remove part of end of the integrator 350 that includes the first input face 352, without eliminating the first input face 352. Indeed, the chamfer 358 may be configured to not extend directly between the sidewalls of the integrator 350, and/or by configuring the chamfer 358 so that the chamfer 358 extends from a side wall, perpendicular to the output face 356, to about two-thirds to three-quarters along an end of the integrator 350 opposite the output face 356 that forms the first input face 352. However, the chamfer 358 may be formed in any suitable manner and/or have any suitable configuration.

In this manner the integrator 350 combines light from the combination of the wheels 304, 314, and the laser(s) 332, 338. However, it is understood that the light generator 300 may be configured such that the positions of the combination of the wheels 304, 314, and the laser(s) 332, 338 are exchanged (along with any associated optics), so that light from the combination of the wheels 304, 314 enters the integrator 350 at the second input face 354, and light from the laser(s) 332, 338 enter the integrator 350 at the first input face 352.

Regardless, in this manner, the components of the light generator 300 may be arranged in a compact manner relative to the integrator 350, minimizing optics needed to direct light through the light generator 300.

Indeed, as depicted, it is understood that the light generator 300 includes any suitable combination of optics to direct light as described herein. For example, as depicted, the light generator 300 includes: a first lens 360-1 and a second lens 360-2 arranged to direct and/or focus light emitted by the pump laser 302 onto the phosphor wheel illumination region 312 of the phosphor wheel 304; a third lens 360-3 arranged to direct and/or focus light from the phosphor wheel 304 into the color wheel illumination region 322 of the color wheel 314; and a fourth lens 360-4 arranged to direct and/or focus light emitted by the integrator 350 into a projection system, as described herein.

As depicted, the light generator 300 further includes an optical component 362, for example in the form of a dichroic (e.g., a cut-off filter and the like), located between the lenses 360-1, 360-2, the optical component 362 configured to transmit the blue light from the pump laser 302 and reflect green and yellow light, emitted by the phosphor wheel 304, towards a third lens 360-3 and/or the color wheel illumination region 322 of the color wheel 314. Indeed, the second lens 360-2 may be further configured to direct the green and yellow light, emitted by the phosphor wheel 304, towards the optical component 362.

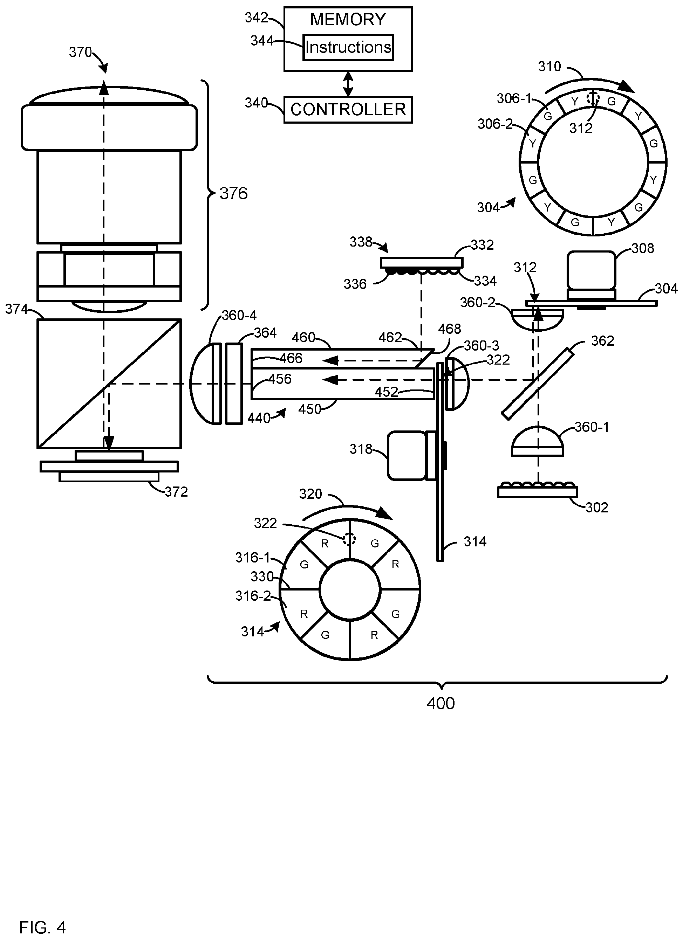

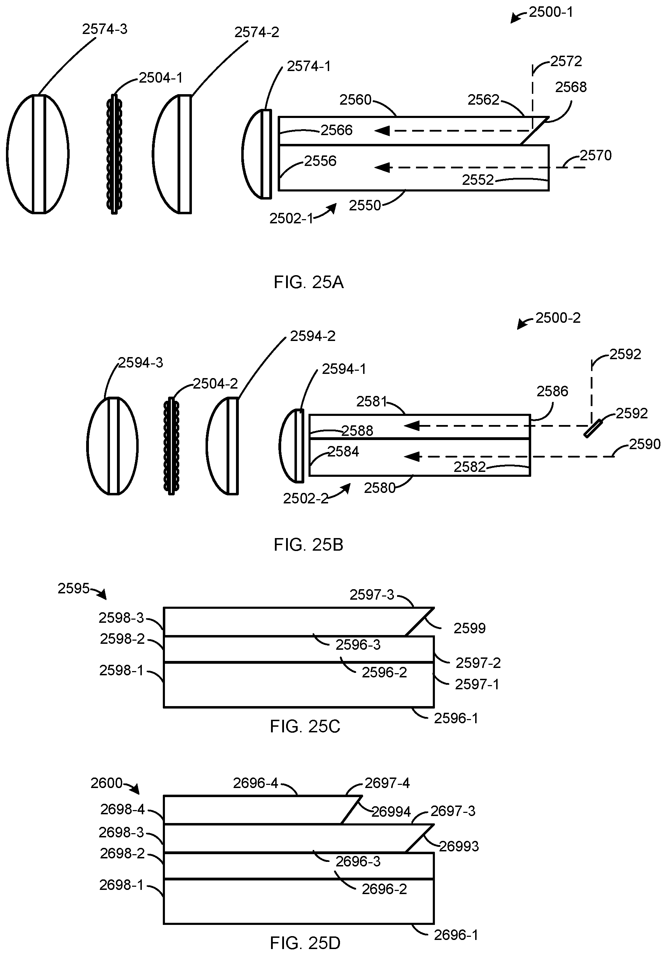

As depicted, the light generator 300 further includes at least one further light integration component 364 (e.g., which may be optional and hence is depicted in broken lines) between the output face 356 of the integrator 350 and the third lens 360-4, and which may include, but is not limited, to a fly's eye integrator, which may refer to an optical component comprising an array of lenslets, and/or facets, (e.g., on one or both sides, see FIG. 25A) configured to spatially redistribute and/or integrate incident light to produce a substantially uniform illumination profile. Alternatively, or in addition, at least one further light integration component 364 may comprise an additional integrator (e.g., integrator rod), though this configuration may be more relevant to the example of FIG. 4, as described herein. The at least one light integration component 364 may be optional as in at least some of these examples, the output face 356 of the integrator 350 may be centered on the third lens 360-4. When present, the at least one further light integration component 364 may be provided to further assist with light integration in addition to the integrator 350.

However, it is understood that such optics are but one example of possible optics that may occur to a person of skill in the art, and indeed, any suitable arrangement of lenses, dichroics (and the like), integrators, and the like are within the scope of the present specification.

As depicted, the light generator 300 is arranged to optically couple to a projection system 370 comprising a spatial light modulator (SLM) 372 (e.g., such as a DMD, a liquid Crystal on Silicon (LCoS) device, and the like), a prism and/or dichroic assembly 374, and the like, and projection optics 376. The projection optics 376 includes any suitable combination of lenses and other suitable optical components, for projecting images formed by the SLM 372.

The prism and/or dichroic assembly 374 is configured to receive light from the integrator 350 (e.g., via the output face 356 and the third lens 360-4), direct the light onto the spatial light modulator 372, and direct modulated light from the spatial light modulator 372 towards the projection optics 376.

The spatial light modulator 372 may be controlled by the controller 340, and/or another controller, not depicted, to coordinate sequential formation of red, green and blue images as the spatial light modulator 372 is sequentially illuminated by the red, green and blue generated by the light generator 300.

Indeed, the controller 340 may provide a timing lock on the combination of the light generator 300 and the projection system 370, matching up an incoming frame synchronization (e.g., frame data used to control the SLM 372) with the wheels 304, 314 (e.g., by adjusting individual rotational speeds of the wheels 304, 314), and the SLM 372 (e.g., which may be sequencing bit planes to match the light received).

Hence, it is understood that the light generator 300 and the projection system 370 may be assembled to form a projector.

However, while it is understood that the light generator 300 is configured to sequentially generate red, green and blue light for a one-light modulator projection system, the projection system 370 is but one example of such a projection system. Indeed, the projection system 370 may comprise a 1DLP projection system, however any suitable light modulator projection system and/or 1DLP projection system is with the scope of the present specification.

For clarity, optical paths of light through the light generator 300 and the projection system 370 are depicted as dashed arrows. For example, a dashed arrow 382 represents an optical path of pump light from the pump laser 302 to the phosphor wheel illumination region 312 of the phosphor wheel 304, a dashed arrow 384 represents an optical path of phosphor light from the phosphor wheel illumination region 312 of the phosphor wheel 304 to the color wheel illumination region 322 and into the integrator 350, a dashed arrow 386 represents an optical path of light from the lasers 332, 338 into the integrator 350, a dashed arrow 388 represents an optical path of light from the integrator 350 to the SLM 372, and a dashed arrow 390 represents an optical path of light (e.g., images) from the SLM 372 out through the projection optics 376.

In some examples, the controller 340 may operate according to one or more modes of operation.

In one mode, the controller 340 may be configured to turn the pump laser 302 off and the blue laser 332 on as the color wheel illumination region 322 approaches a spoke 330 joining a first color segment 316-1 and a second color segment 316-2, and to turn the pump laser 302 on and the blue laser 332 off when the spoke 330 is no longer within the color wheel illumination region 322.

In another mode, the controller 340 may be configured to control one or more respective time periods during which the blue laser 332 and the pump laser 302 are on and off to thereby control respective intensities of the blue light, the green light, and the red light. However, it is understood that while the blue laser 332 is on, the pump laser 302 is off, and, conversely, while the pump laser 302 is on, the blue laser 332 is off (e.g., such that the light generator 300 is outputting one color of light at a time, red, green or blue, to the projection system 370). In this example, the blue laser 332 may be on for a time period when the spoke 330 is no longer within the color wheel illumination region 322 to extend a time period that blue light is being output by the light generator 300 and shorten a red light period or green light period. In another mode, the controller 340 may be configured to control one or more respective output intensities of one or more of the blue laser 332 and the pump laser 302 to thereby control respective intensities of the blue light, the green light, and the red light.

In another mode, the controller 340 may be configured to turn the pump laser 302 off and the blue laser 332 on as the color wheel illumination region 322 approaches a spoke 330, and to maintain the pump laser 302 off when the spoke 330 is no longer within the color wheel illumination region 322, while maintaining the blue laser 332 on for a duration that is longer than a spoke transition time associated with the spoke 330 passing through the color wheel illumination region 322. As used herein, "spoke transition time" refers to a time interval during which a spoke, traverses the color wheel illumination region 322 of the color wheel 314 and/or a spoke transition time corresponds to a period in which light incident on the color wheel illumination region 322 may be partially or variably filtered by adjacent color segments 316, resulting in mixed or transitional spectral output. For example, the duration that is longer than a spoke transition time associated with the spoke 330 passing through the color wheel illumination region 322 may include, but is not limited to, 1% of the spoke transition time, 5% of the spoke transition time, 10% of the spoke transition time, amongst other possibilities, though such a duration may be determined heuristically depending on how much additional blue light is to be added to achieve a given color gamut and/or white point and/or efficiency, and the like. However such a duration should not cause the blue laser 332 to still be on when a next spoke 330 approaches the color wheel illumination region 322 so that the pump laser 302 is on and the blue laser 332 is off for at least a portion of the time that a spoke 330 is not within the color wheel illumination region 322.

Put another way, the controller 340 may be configured to: turn the pump laser 302 off and the blue laser 332 on as the color wheel illumination region 322 approaches a spoke 330 joining a first color segment 316 and a second color segment 316; and maintain the pump laser 302 on when the spoke 330 is no longer in the color wheel illumination region 322 and maintain blue laser 332 on at least partially during a period when the spoke 330 is no longer in the color wheel illumination region 322, for example to extend a period in which blue light is generated. However, after such an extended period, and shorten and/or shrink a period in which red or green light is generated. However, it is understood that again the blue laser 332 is turned off, and the pump laser 302 is turned on to again generate red or green light before the color wheel illumination region 322 again approaches a spoke 330.

In another mode, the controller 340 may be configured to selectively control operation of the pump laser 302 and the blue laser 332 based on different portions of spokes 330, including extending the blue light generation period for a first portion of the spoke 330 and not extending the blue light generation period for a second portion of the spoke 330 (e.g., which may depend on bit planes being generated by the SLM 372), and the portions may be consecutive, or may be interspersed with each other. It is understood that a blue light generation period comprises a period in which the blue laser 332 is on and the pump laser 302 is off.

Furthermore, one or more of such modes may be adapted for similar control of the further laser 338 to provide additional red light and/or green light into the integrator 350.

One or more of the above modes may be combined and/or modified to achieve a desired white point and/or relative intensities of red, green, and blue light.

Furthermore, other configurations of light generators are within the scope of the present specification.

For example, the phosphor wheel 304 may comprise only one phosphor that emits light in both a green and red spectrum, such as yellow light. Hence, in these examples, rotation of the wheels 304, 314 need not be coordinated, though timing of the lasers 302, 332 are coordinated. Such an example may, however, result a lower efficiency and/or image brightness level.

Hence, more generally, the present specification provides a device comprising: a pump laser; a phosphor wheel comprising one or more phosphors that emit light when illuminated by the pump laser; a color wheel comprising alternating color segments of a first color and a second color, wherein the color wheel is arranged to receive the light in an illumination region through which the alternating color segments rotate, wherein the alternating color segments of the first color and the second color respectively filter the light to respectively output green light and red light; a blue laser configured to generate blue light; a controller configured to: turn the pump laser off and the blue laser on as a spoke, joining a first color segment and a second color segment of the color wheel, approaches the illumination region; and turn the pump laser on and the blue laser off when the spoke is no longer in the illumination region; and an integrator configured to receive and integrate the green light, the red light and the blue light.

Indeed, any light integrator described herein may be adapted accordingly.

It is further understood that, when the phosphor wheel 304 is adapted to include only one phosphor, such a phosphor may be provided in segments for ease of fabrication.

Attention is next directed to FIG. 4 which depicts a light generator 400, optically coupled to the projection system 370. The light generator 400 is substantially similar to the light generator 300, with like components having like numbers, other than an integrator. Similar to the light generator 300, optical paths of light in the light generator 400 are depicted as dashed arrows.

As depicted, the light generator 400 comprises a two component integrator device 440 comprising a first integrator 450, that is substantially similar to the integrator 350 of the light generator 300 of FIG. 3, but lacking a chamfer. Hence, the first integrator 450 comprises an input face 452 and an opposite output face 456, respectively substantially similar to the input face 352 and the output face 356 of the integrator 350 of the light generator 300 of FIG. 3. In particular, the input face 452 receives light from the combination of the wheels 304, 314, and the output face 456 outputs such light to the at least one light integration component 364 which, in this example, may not be optional.

As depicted the two component integrator device 440 comprising a second integrator 460, adjacent the first integrator 450 (e.g., and/or stacked on the first integrator 450 and/or arranged lengthwise, relative to the first integrator 450, in any suitable manner). The second integrator 460 comprises an input face 462 and an output face 466, with the input face 462 being arranged on a side of the second integrator 460 perpendicular to the output face 466. The input face 462 is arranged to receive light from the blue laser 332 and/or the further laser 338. The second integrator 460 further includes a chamfer 468 (e.g., of about 45°) on a side opposite the input face 462 that directs light from the blue laser 332 and/or the further laser 338 into the second integrator 460 and/or towards the output face 466. Indeed, the input face 462, the output face 466 and the chamfer 468 are arranged substantially similar to the to the second input face 354, the output face 356 and the chamfer 358 of the integrator 350 of the light generator 300 of FIG. 3. Integration systems that incorporate further two component integrator devices, similar to the integrator device 440, as well as further integrator component, similar to the further integrator component 364, are described in more detail with respect to FIG. 25A and FIG. 25B.

The at least one light integration component 364 may generally be configured to integrate output from the integrators 450, 460 to generate a uniform illumination profile and/or a uniform image used to illuminate the SLM 372, regardless of which integrator 450, 460 is outputting light at any given time. The at least one light integration component 364 may generally comprise a fly's eye integrator, as well as any suitable optics configured to generate a uniform illumination profile and/or a uniform image used to illuminate the SLM 372 (e.g. and/or to to further blend the light), regardless of which integrator 450, 460 is outputting light at any given time.

Alternatively, or in addition, in the example of FIG. 4, the at least one light integration component 364 may comprise an additional integrator (e.g., an integrator rod), similar to the first integrator 450, but with an input face having dimensions similar to the combination of the output faces 456, 466 of the integrator rods 450, 460. In other words, an input face of such an additional integrator (e.g., an integrator rod) may be arranged to receive the light from the output faces 456, 466 of the integrator rods 450, 460, integrate such light, and output the integrated light to the projection system 370 (e.g., via the optics 360-4). As such, an illumination profile and/or uniform image from such an integration rod, that is output to the projection system 370, will be the same and/or similar regardless of the source of light (e.g., one of the integrator rods 450, 460). Indeed, a fly's eye integrator will have a similar affect.

It is further understood, however, that the respective output faces 456, 466 of the integrators 450, 460, and the at least one light integration component 364 are arranged such that light exiting both of the respective output faces 456, 466 enter the at least one light integration component 364, which integrates the light and/or further blend the light, to produce a more uniform illumination profile and/or uniform image for the projection system 370. Indeed, as one or more the respective output faces 456, 466 may not be centered on the third lens 360-4, the at least one light integration component 364 may be used to better integrate the light so that the third lens 360-4 may direct a more uniform profile of each color of the light to the projection system 370.

It is further understood that, similar to the light generator 300 of FIG. 3, the light generator 400 may also be adapted to include only one phosphor at the phosphor wheel 304.

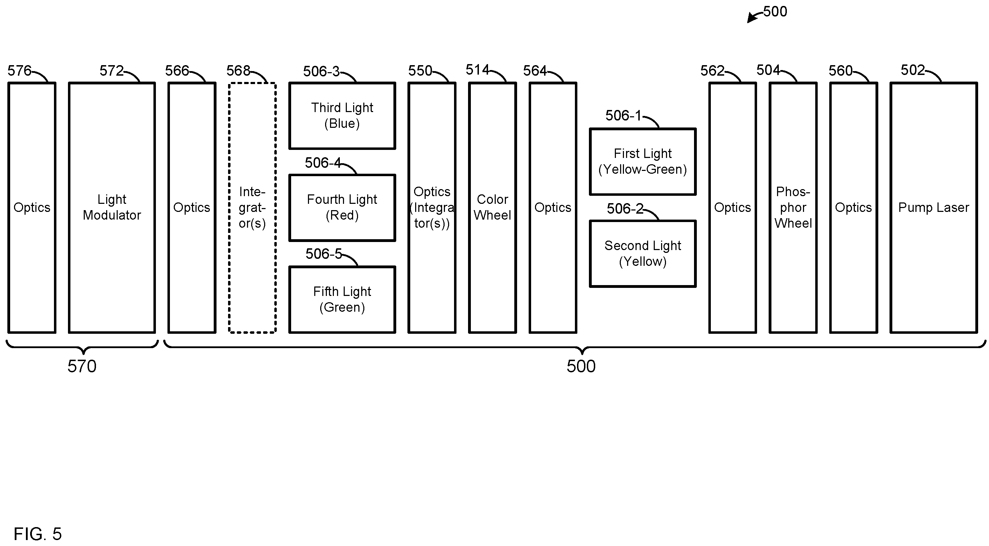

Attention is next directed to FIG. 5, which depicts a block diagram of the optical components of a light generator 500 that may be substantially similar to one or more of the light generators 300, 400, with like components having like numbers but in a "500" series, though the light generator 500 may be adapted for phosphors wheels having any suitable alternating phosphor segments, that emit any suitable colors of light, and color wheels having any suitable alternating phosphor segments of any suitable colors separated by spokes.

As depicted, the light generator 500 comprises a pump laser 502, a phosphor wheel 504, which is understood to include alternating phosphor segments (not depicted, but similar to the alternating phosphor segments 306) that emit first light 506-1 (e.g., as depicted, yellow-green light) and second light 506-2 (e.g., as depicted, yellow light) at different wavelengths and/or wavelength spectra when respectively illuminated by the pump laser 502; a color wheel 514 comprising alternating color segments of a first color and a second color (not depicted, but similar to the alternating color segments 316), the color wheel 514 being arranged to receive the first light 506-1 and the second light 506-2 in an illumination region (not depicted, but similar to the color wheel illumination region 322) through which the alternating color segments rotate, and the alternating color segments of the first color and the second color respectively filter the first light and the second light. While such filtering is not shown in FIG. 5, it is understood that such filtering occurs.

Furthermore, also shown in FIG. 5 is insertion of third light 506-3 (e.g., blue light, and/or any other suitable color), and optional fourth light 506-4 (e.g., red light, and/or any other suitable color) and/or optional fifth light 506-5 (e.g., green light, and/or any other suitable color) occurs after the color wheel 514 and/or downstream from the color wheel 514 (e.g., on an optical path of light through the light generator 500). While such insertion is shown after the optics 550, such insertion may occur into the optics 550, similar to as shown in FIG. 3 and FIG. 4. Hence it is understood that, while not depicted, a blue laser and/or a further laser (e.g., respectively similar to the blue laser 332 and/or the further laser 338) may be used to generate the third light 506-3, the fourth light 506-4, and the fifth light 506-5, and the optics 550 (e.g., one or more integrators that may be similar to the integrators 350, 440) may be configured to receive and integrate the third light 506-3, the fourth light 506-4 and the fifth light 506-5, as well as the first light 506-1 and the second light 506-2 after filtering by the color wheel 514.

As depicted, the light generator 500 includes any suitable optics 560, 562, 564, 566 for directing light within the light generator 500, and which may be similar to, or different from, the optics of the light generators 300, 400. As depicted, the light generator 500 optionally includes any suitable at least one integration component 568, which may be similar to, or different from, the at least one light integration component 364.

While not depicted, it is understood that the light generator 500 may include a controller (e.g., similar to the controller 340) configured to: turn the pump laser 502 off and the blue and/or further laser on as a spoke, joining a first color segment and a second color segment of the color wheel 514, approaches a color wheel illumination region; and turn the pump laser 502 on and the blue and/or further laser off when the spoke is no longer in the color wheel illumination.

As depicted, the light generator 500 outputs light to a projection system 570 that includes a spatial light modulator 572 and optics 576, which may be substantially similar, respectively, to the projection system 370, the spatial light modulator 372 and the optics 376. While not depicted, such a projection system 570 is further understood to include a prism and/or dichroic assembly similar to the a prism and/or dichroic assembly 374.

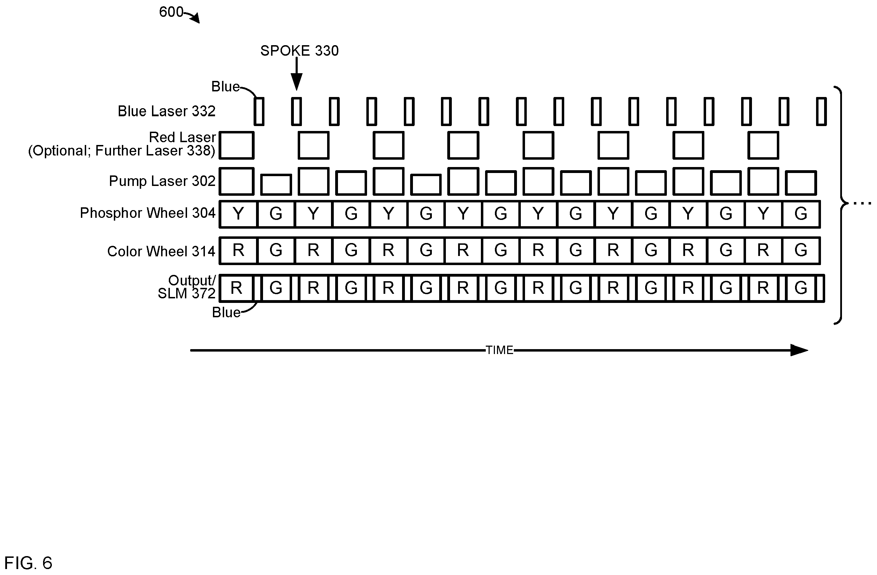

Attention is next directed to FIG. 6, which depicts an example timing diagram 600 illustrating operation of the light generator 300, and/or the light generator 400. In particular, FIG. 6 illustrates relative timing of activation of the pump laser 302, the blue laser 332, and light output from the phosphor wheel 304, the color wheel 314, to the SLM 372, as a function of time, as the wheels 304, 314 rotate. In particular, columns of the timing diagram 600 depict when the lasers 302, 332 (and optionally red LEDs of the further laser 338) are on or off, concurrent positions of the phosphor segments 306 of the phosphor wheel 304 in the phosphor wheel illumination region 312, and concurrent positions of the color segments 316 of the color wheel 314 in the color wheel illumination region 322. An ellipsis indicates that the timing diagram 600 continues to repeat, for example until a light generator 300, 400 is turned off, and the like.

As shown in FIG. 6, when a red segment 316 (e.g., "R") of the color wheel 314 is in the color wheel illumination region 322 (e.g., and a spoke is not in the color wheel illumination region 322), a yellow phosphor segment 306 (e.g., "Y") of the phosphor wheel 304 is in the phosphor wheel illumination region 312. Furthermore, the pump laser 302 is on so that yellow light is generated by the phosphor wheel 304, which passes through the red segment 316 (e.g., "R") of the color wheel 314 to produce red light at an output (e.g., the fourth lens 360-4) so that the SLM 372 is illuminated with red light.

Similarly, when a green segment 316 (e.g., "G") of the color wheel 314 is in the color wheel illumination region 322 (e.g., and a spoke is not in the color wheel illumination region 322), a yellow-green phosphor segment 306 (e.g., "G") of the phosphor wheel 304 is in the phosphor wheel illumination region 312. Furthermore, the pump laser 302 is on so that green light is generated by the phosphor wheel 304, which passes through the green segment 316 (e.g., "G") of the color wheel 314 to produce green light at an output (e.g., the fourth lens 360-4) so that the SLM 372 is illuminated with green light.

However, FIG. 6 further illustrates that when a spoke 330 joining adjacent color segments of the color wheel 314 approaches and passes through (e.g., is in) the color wheel illumination region 322, the pump laser 302 is turned off and the blue laser 332 is turned on. During this period, blue light is provided directly (e.g., "Blue" in FIG. 6) to the integrator 350/440, rather than light generated by the phosphor wheel 304.

Conversely, when a color segment 316 (e.g., one of the first color segments or the second color segments) is within the color wheel illumination region 322 and a spoke 330 is no longer in the color wheel illumination region 322, the pump laser 302 is turned on and the blue laser 332 is turned off, resuming generation of red light or green light. As has been previously described, during this period, light emitted by the phosphor wheel 304 is filtered by a corresponding color segment 316 of the color wheel 314 to produce one of the sequential red or green outputs.

Such generation of blue light hence occurs between generation of red light and green light, and vice versa, so that the output of the light generator 300, 400 is red light, blue light, green light, blue light, which is repeated, as shown at the output in the last row of the timing diagram 600.

In this manner, generation of mixed or transition colors that would otherwise occur when light from the phosphor wheel 304 passes through adjacent color segments 316 is reduced and/or avoided.

FIG. 6 further illustrates that red lasers of the further laser 338 may be turned on while the pump laser 302 is turned on and the yellow phosphor segments 306 are generating yellow light, which is filtered by the red color segments 316 to produce red light. The red light generated by the lasers of the further laser 338 may be used to enhance brightness and/or a color gamut of the red light output by the light generators 300, 400.

Similarly, while not depicted, green lasers of the further laser 338 may be turned on while the pump laser 302 is turned on the yellow-green phosphor segments 306 are generating yellow-green light, which is filtered by the green color segments 316 to produce green light. The green light generated by the lasers of the further laser 338 may be used to enhance brightness and/or a color gamut of the green light output by the light generators 300, 400.

FIG. 6 further illustrates that the pump laser 302 may be controlled to different intensities (e.g., as represented by the blocks representing the pump laser 302 being of different heights) to control respective intensity of green or yellow light output by the phosphor wheel 304 and hence respective intensity of green or red light output by the light generators 300, 400. For example, as depicted, the pump laser 302 is being controlled to a higher intensity when yellow light is generated by the phosphor wheel 304, relative to when green light is generated by the phosphor wheel 304.

Alternatively, or in addition, (while not depicted) respective time periods for which the pump laser 302 is on may be controlled to control time periods that yellow-green or yellow light is output by the phosphor wheel 304. Such control may have a similar effect to controlling the intensity of the pump laser 302.

Indeed, while also not depicted, the blue laser 332 and/or the further laser 338 may be controlled in a similar manner with respect to intensity and/or time period.

Indeed, such control of intensity and/or time period by further to achieve a given white point color of images generated by the SLM 372 when illuminated by the red, green and blue light output by the light generators 300, 400.

Hence, FIG. 6 illustrates that the light generators 300, 400 (and/or the light generator 500) are configured to temporally interleave generation of blue light with generation of red and green light based on positions of spokes 330 of the color wheel 314 relative to the color wheel illumination region 322, thereby reducing or eliminating light generated during transitions between adjacent color segments and increasing an effective color cycle rate. Indeed, FIG. 6 further illustrates that the light generators 300, 400 (and/or the light generator 500) are configured to only have one of the pump laser 302 and the blue laser 332 on at any given time so that only red light, green light or blue light is being output at any given time.

Put another way, issues with high color cycle rates may be due to generation of secondary colors due to color transitions. The light generators 300, 400 (and/or the light generator 500) eliminate and/or minimize these issues by turning on the blue laser 332 and turning off the pump laser 302 during the color transitions (e.g., the spokes 300) of the color wheel 314 in the color wheel illumination region 322. This enables the light generators 300, 400 to output blue light (e.g., without need of a transparent segment of a color wheel), and eliminates and/or minimizes secondary colors that would be generated if light generated by the phosphor wheel 304 were to impinge on the color wheel illumination region 322 while spoke 330 was present in the color wheel illumination region 322.

Furthermore, the light generators 300, 400 (and/or the light generator 500) may be adapted to provide a 1DLP LaPh system with similar output and/or quality as a solid state laser based system.

Additionally, the projection system 370 used with the light generators 300, 400 (and/or the light generator 500) may be modified to include an actuator configured to increase pixel resolution. As used herein, an "actuator" may refer to a device configured to impart controlled motion to the spatial light modulator 372, such as translational, rotational, and/or vibrational motion, including sub-pixel displacements. In some examples, the actuator may comprise a piezoelectric actuator, an electromagnetic actuator, a microelectromechanical system (MEMS) actuator, and/or any other suitable positioning mechanism capable of shifting the spatial light modulator 372 by less than a pixel pitch. For example, such an actuator may be configured to pixel shift the spatial light modulator 372 to increase an effective displayed resolution.

Furthermore, in some of these examples, a duration of the blue light output may be extended during transition periods corresponding to spokes 330 of the color wheel 314, and operation of the actuator, when present, may be coordinated to occur during at least a portion of the extended blue light period. This may be achieved by the controller 340 turning the pump laser 302 off earlier than would otherwise be used for when a spoke 330 is approaching the color wheel illumination region 322, and turn the blue laser 332 on for a longer interval before, during, and/or after passage of the spoke 330 through the color wheel illumination region 322 (e.g., the pump laser 302 being off), thereby defining an extended blue light period and shrinking a red light period or green light period, with no overlap of the colors. The controller 340 may further drive the aforementioned actuator coupled to the spatial light modulator 372 such that movement of the spatial light modulator 372 occurs during at least a portion of the extended blue light period. For example, the actuator may begin movement after the pump laser 302 is turned off and complete at least a portion of the movement before the pump laser 302 is turned on again. In this manner, motion of the spatial light modulator 372 for pixel shifting may be temporally aligned with blue illumination rather than with red or green illumination generated through the phosphor wheel 304 and the color wheel 314. Indeed, for the pixel shifting, the actuator may shift the SLM 372 during all the color times, but color sequencing for the actuator may not change.

Furthermore, it is understood that the SLM 372 of the projection system 370 may be capable of rendering multiple bitplanes during passage of a spoke 330 through the color wheel illumination region 322. In such examples, the light generators 300, 400 (and/or the light generator 500) may be configured to provide blue light during periods in which the SLM 372 is rendering one or more blue bitplanes. Accordingly, multiple blue bitplanes may be rendered during such periods, thereby increasing effective bit depth and color cycle rate for blue light in addition to red and green light. As used herein, a "bitplane" refers to a temporally displayed and/or rendered binary image corresponding to a given significance bit of respective pixel intensity data, and multiple bitplanes are sequentially displayed by a spatial light modulator (e.g., the SLM 372) within a frame period to generate a composite image having a desired intensity and/or color.

Indeed, the timing relationships illustrated in FIG. 6 may be coordinated with display of corresponding bitplanes by the SLM 372.

Attention is next directed to FIG. 7, which illustrates a chart 700 depicting example relationships between color wheel segment size (e.g., color segments 316) and color cycle rate for different color wheel configurations. In particular, FIG. 7 shows segment size in degrees as a function of color cycle rate for color wheels operating at, for example, 2x, 3x, and 4x rotational rates relative to a frame rate. As illustrated, color cycle rate generally decreases with decreasing segment size for each of the 2×, 3×, and 4× configurations.

FIG. 7 further identifies, via a marked point (e.g., an "X"), an example configuration corresponding to a color cycle rate of approximately 18X on the 3x rotational rate curve. This marked configuration may correspond to example implementations of the light generators 300, 400, and/or 500 described herein. In particular, the marked configuration may represent a combination of color wheel rotational rate and segment size that provides a desirable balance between achievable color cycle rate and practical segment size constraints. However, any other suitable operating conditions are within the scope of the present specification; for example, in another configuration, a color cycle rate of 16x may be used with a 4x color wheel rotational rate relative to a frame rate.

Indeed, in some examples, the color wheel 314 is rotated at a rotational speed above a threshold speed selected to achieve a color cycle rate within a range associated with reduced or eliminated perceptible color breakup. For example, with reference to FIG. 7, the threshold speed may correspond to a rotational speed that, in combination with a number and size of color wheel segments, provides a color cycle rate of at least about 15× to 20× per frame. Operation above the threshold speed increases temporal frequency of color presentation such that individual color components are less perceptible to a viewer, thereby improving perceived color uniformity relative to operation below the threshold speed. Put another way, the color wheel 314 may is rotated above a threshold speed such that color breakup is reduced or eliminated as compared to speeds below the threshold speed.

In some implementations, practical lower limits on segment size (e.g., on the order of approximately 20 to 25 degrees) may constrain achievable color cycle rates for a given wheel configuration. For example, a 3x color wheel configuration may provide a relatively cost-effective solution for achieving a color cycle rate of approximately 18X within such constraints, as indicated by the marked configuration. In other implementations, higher rotational rate configurations (e.g., 4x) may achieve higher color cycle rates, but may involve different trade-offs in terms of segment size, system complexity, and cost; indeed, in a successful prototype, a four way actuator was used for pixel shifting using a 4X color wheel rotational rate, with pixel shifting occurring four times per frame.

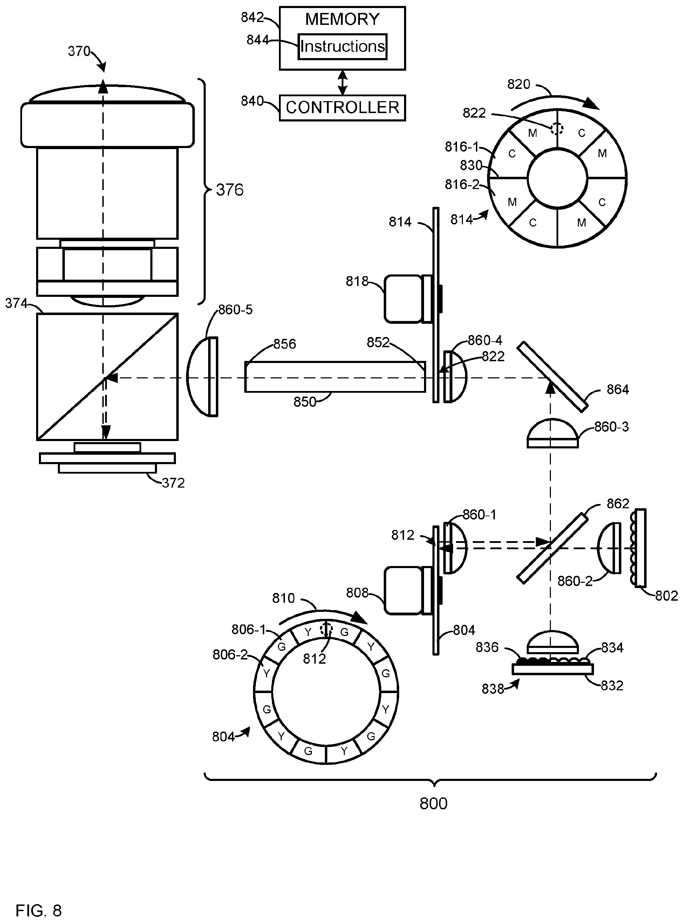

Attention is next directed to FIG. 8, which depicts a laser-phosphor based light generator 800 according to further non-limiting examples. The light generator 800 is similar in general operation to the light generator 300 of FIG. 3, but utilizes a color wheel comprising cyan and magenta segments. Components of the light generator 800 are substantially similar to components of the light generator 300, with like components having like numbers, but in an "800" series rather than a "300" series. Optical paths of light through the light generator 800 and the projection system 370 are depicted as dashed arrows.

In particular, as shown in FIG. 8, the light generator 800 comprises:
- a pump laser 802 configured to emit (e.g., pump light, such as blue light at about 455 nm, or any other suitable wavelength).
- a phosphor wheel 804 comprising alternating phosphor segments 806-1, 806-2 (e.g., phosphor segments 806 and/or a phosphor segment 806), which emit first light and second light at different wavelengths and/or wavelength spectra when respectively illuminated by the pump laser 802. The phosphor wheel 804 is depicted from a side view relative to other components of the light generator 800, and also in a front view to show details of the alternating phosphor segments 806, which, as depicted, include alternating green and/or yellow-green (e.g., "G") and yellow (e.g., "Y") phosphor segments 806 which respectively emit yellow-green and yellow light (e.g. see FIG. 11). However, in other examples, only yellow-green may be used as described herein with respect to FIG. 3. The phosphor wheel 804 is coupled to a motor 808 configured to rotate the phosphor wheel 804 (e.g., as indicated by arrow 810) such that the phosphor segments 806 rotate through a phosphor wheel illumination region 812 illuminated by the pump laser 802. Put another way, the phosphor wheel illumination region 812 comprises a region of the phosphor wheel 804 where light from the pump laser 802 impinges, and the yellow-green and yellow phosphor segments 806 are understood to rotate through this phosphor wheel illumination region 812.
- a color wheel 814 comprising alternating color segments 816-1, 816-2 (collectively referred to as color segments 816), which include alternating first color segments and second color segments. The color wheel 814 is depicted from a side view relative to other components of the light generator 800, and also in a front view to show details of the alternating color segments 816, which, as depicted, include alternating cyan (e.g., "C", a first color) and magenta (e.g., "M", a second color) segments 816. The color wheel 814 is coupled to a motor 818 configured to rotate the color wheel 814 (e.g., as indicated by arrow 820) such that the color segments 816 rotate through a color wheel illumination region 822. Adjacent color segments 816 are separated by spokes 830. The color wheel illumination region 822 comprises a region of the color wheel 814 where light from the lasers 832, 838 and the phosphor wheel 804 impinges, and the cyan and magenta segments 816 are understood to rotate through the color wheel illumination region 822.
- a blue laser 832 configured to generate blue light. For example, as depicted the blue laser 832 may comprise a bank of blue lasers 834 that emit light at about 465 nm, or, alternatively, at about 455 nm. As depicted, the blue laser 832 may optionally include a bank 836 of lasers that emit light at one or more others color, such as red or green, at any suitable wavelength. Indeed, the blue laser 832 may be referred to being a component of a further laser 838 (e.g., "further" relative to the pump laser 802), configured to generate the blue light and one or more of respective red light and respective green light, which may be used to enhance the red light and/or green light generated by the combination of the phosphor wheel 804 and the color wheel 814. As with the light generator 300, the blue laser 832 be separate from the further laser 838 and/or the further laser 838 may comprise a red laser and a green laser.

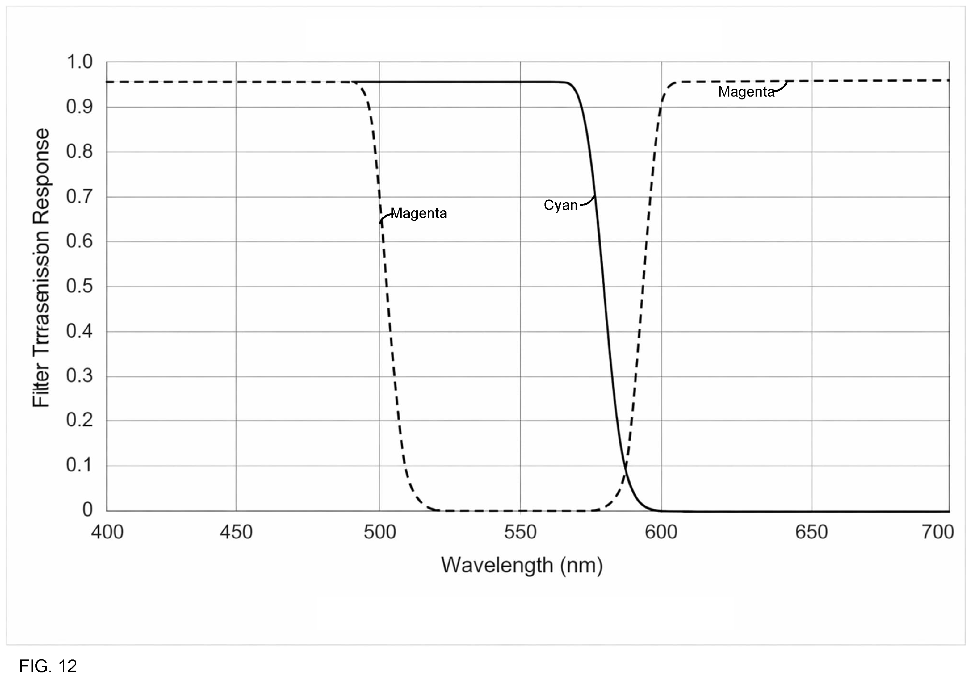

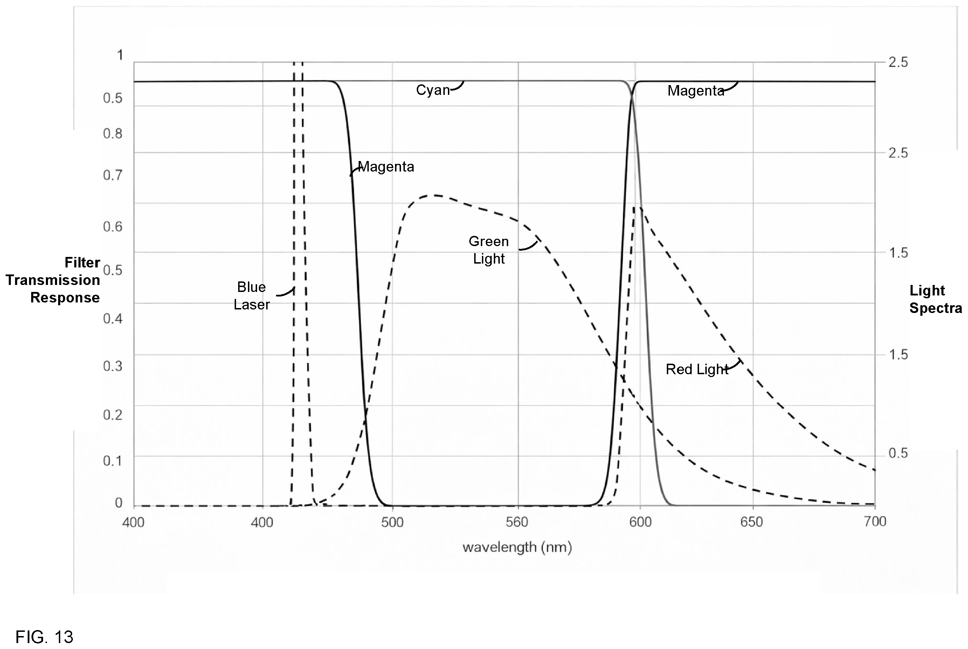

In contrast to the light generator 300, however, the color wheel 814 is generally arranged to receive light from the phosphor wheel 804 and blue light from the blue laser 832 (as well as any red light and/or green light from the further laser 838) in the color wheel illumination region 822. In particular, the cyan segments 816 may transmit and/or filter yellow-green phosphor light to produce green light, and the magenta segments 816 may transmit and/or filter yellow phosphor light to produce red light. However, both the cyan segments 816 and magenta segments 816 are at least partially transmissive to blue light from the blue laser 832. Details of the transmission properties of the cyan segments 816 and magenta segments 816 are described herein with respect to FIG. 12 and FIG. 13.
- a controller 840 communicatively coupled with a memory 842 storing program instructions 844 that, when executed by the controller 840, causes the controller 840 to perform a set of operations as described herein. In particular, the controller 840 is configured to control operation of the pump laser 802, the blue laser 832, and the motors 808, 818. In particular, the controller 840 may coordinate rotation of the phosphor wheel 804 and the color wheel 814 such that when a yellow-emitting phosphor segment 806 is within the phosphor wheel illumination region 812, a corresponding magenta segment 816 is within the illumination region 822, and when a yellow-green-emitting phosphor segment 806 is within the phosphor wheel illumination region 812, a corresponding cyan segment 816 is within the illumination region 822. Put another way, the controller 840 may coordinate rotation of the phosphor wheel 804 and the color wheel 814 such that when a yellow-emitting phosphor segment 806-2 is within the phosphor wheel illumination region 812, a corresponding magenta segment 816 is within the color wheel illumination region 822, and when a yellow-green-emitting phosphor segment 806-1 is within the phosphor wheel illumination region 812, a corresponding cyan segment 816 is within the color wheel illumination region 822.

The controller 840 is further configured to turn the pump laser 802 off and the blue laser 832 on as a spoke 830 between adjacent cyan and magenta segments 816 approaches and/or enters the illumination region 822, and to turn the pump laser 802 on and the blue laser 832 off when the spoke 830 is no longer within the illumination region 822. The controller 840 may be further configured to control the further laser 838.
- an integrator 850 configured to receive and integrate light from the color wheel 814 and the blue laser 832. The integrator 850 may include an input face 852 and an opposite output face 856, and may be configured to spatially and/or angularly homogenize incident light to provide a uniform illumination profile.
- optics including one or more lenses 860-1, 860-2, 860-3, 860-4, 860-5 (e.g., lenses 860 and/or a lens 860) and at least one optical component 862, 864 (e.g., dichroic components and/or mirrors) configured to direct light from the pump laser 802 to the phosphor wheel 804, and to direct light from the phosphor wheel 804 and the blue laser 832 to the color wheel 814 and subsequently to the integrator 850. In particular, the optical component 862 may comprise a dichroic component configured to: transmit light from the laser 802 to the phosphor wheel illumination region 812; transmit light from the laser 832 and/or the further laser 838 to the optical component 864; and reflect phosphor light from the phosphor wheel 804 to the optical component 864. The optical component 864 may comprise a mirror which reflects light from the lasers 802, 832, 838 and the phosphor wheel 804, received via the optical component 862, towards the color wheel illumination region 822. The lenses 860 generally focus and/or direct light towards any suitable component, similar to the lenses 360.
- the projection system 370 including the spatial light modulator 372, a prism and/or dichroic assembly 374, and the projection optics 376, configured to receive integrated light from the integrator 850, modulate the light to form an image, and project the image, similar to as previously described.

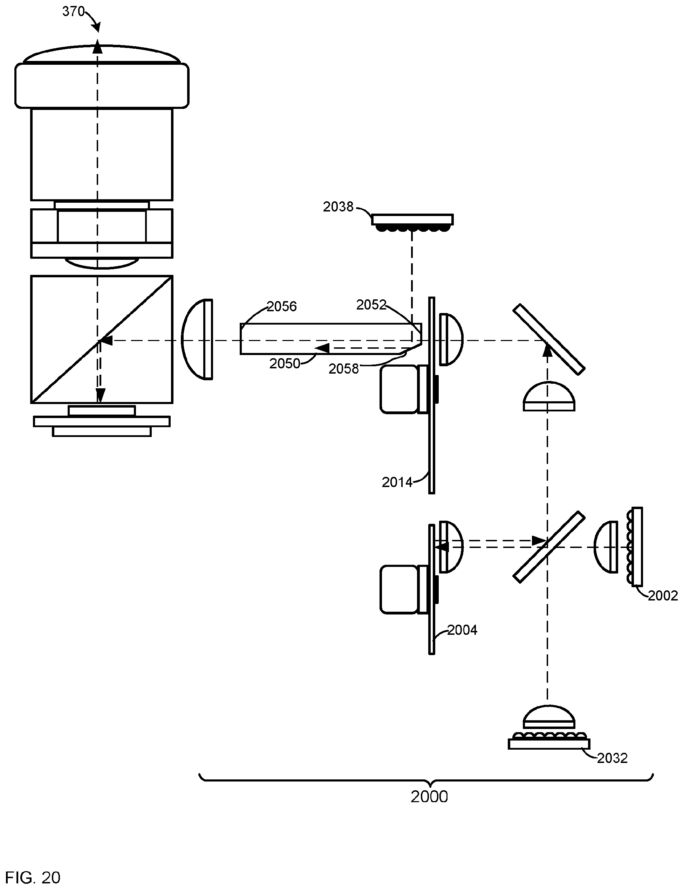

As depicted in FIG. 8, the color wheel 814 is positioned along an optical path between the phosphor wheel 804 and the integrator 850 such that both phosphor-generated light and blue light from the blue laser 832 pass through the color wheel 814. Because the cyan and magenta segments 816 are at least partially transmissive to blue wavelengths, the blue light may pass through the color wheel 814 regardless of which segment 816 is present in the illumination region 822. Indeed, this arrangement is in contrast to the arrangement of the light generators 300, 400, 500 where blue light is added via an integrator and does not pass through a color wheel. However, in other examples, the light generator 800 could be configured similar to the light generators 300, 400, 500 where the laser 832, 838 is positioned to bypass the color wheel such that light therefrom is injected into the integrator 850 (e.g., see FIG. 20).

Regardless, in this manner, the light generator 800 is configured to generate red light, green light, and blue light along a common optical path, while enabling selective control of light generation based on positions of the color segments 816 and spokes 830, similar to as described with respect to FIG. 3.

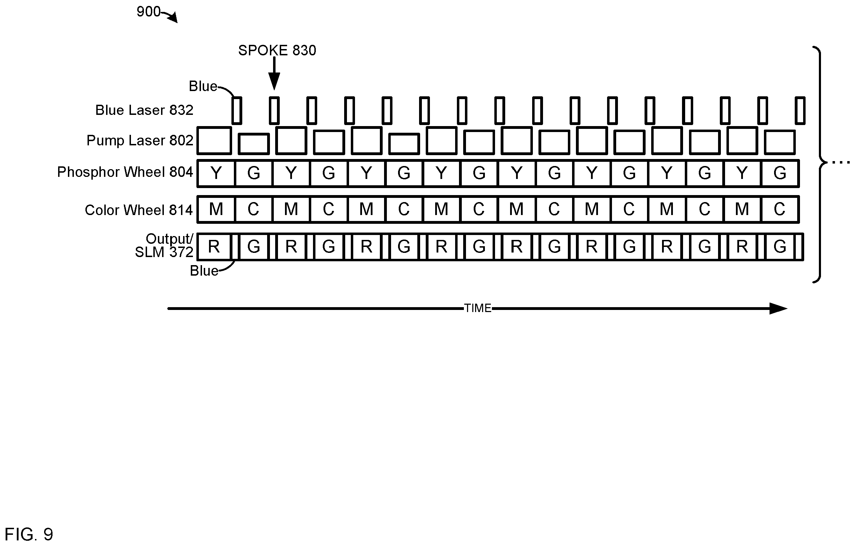

Attention is next directed to FIG. 9, which depicts an example timing diagram 900 illustrating operation of the light generator 800, and which is substantially similar to the timing diagram 600 of the light generator 300 unless otherwise described.

In particular, FIG. 9 illustrates relative timing of activation of the pump laser 802 and the blue laser 832, as well as corresponding positions of phosphor segments 806 of the phosphor wheel 804 and color segments 816 of the color wheel 814, and resulting light output provided to the SLM 372, as a function of time as the phosphor wheel 804 and the color wheel 814 rotate. Columns of the timing diagram 900 depict when the pump laser 802 and the blue laser 832 are on or off, concurrent positions of the phosphor segments 806 within the phosphor wheel illumination region 812, and concurrent positions of the color segments 816 within the color wheel illumination region 822. An ellipsis indicates that the timing diagram 900 repeats.

As shown in FIG. 9, when a magenta segment 816-2 (e.g., "M") of the color wheel 814 is within the color wheel illumination region 822 (e.g., and a spoke 830 is not within the color wheel illumination region 822), a yellow-emitting phosphor segment 806 of the phosphor wheel 804 is within the phosphor wheel illumination region 812. During this period, the pump laser 802 is on and the blue laser 832 is off, such that yellow light emitted by the phosphor wheel 804 passes through a magenta segment 816-2 to produce red light that is output towards the integrator 850 and the SLM 372.

Similarly, when a cyan segment 816-1 (e.g., "C") of the color wheel 814 is within the color wheel illumination region 822 (e.g., and a spoke 830 is not within the illumination region 822), a yellow-green emitting phosphor segment 806 of the phosphor wheel 804 is within the phosphor wheel illumination region 812. During this period, the pump laser 802 is on and the blue laser 832 is off, such that yellow-green light emitted by the phosphor wheel 804 passes through a cyan segment 816-1 to produce green light that is output towards the integrator 850 and the SLM 372.

FIG. 9 further illustrates that when a spoke 830 joining adjacent cyan and magenta segments 816 approaches and passes through the illumination region 822, the pump laser 802 is turned off and the blue laser 832 is turned on. During this period, blue light generated by the blue laser 832 passes through the color wheel 814 in the color wheel illumination region 822, including through one or more of the cyan segments 816-1, the magenta segments 816-2, and/or the spoke 830, and is output towards the integrator 850 and the SLM 372.

Conversely, when a color segment 816 (e.g., one of the cyan segments 816-1 or the magenta segments 816-2) is within the illumination region 822 and the spoke 830 is no longer within the color wheel illumination region 822, the pump laser 802 is turned on and the blue laser 832 is turned off, resuming generation of red light or green light.

Accordingly, the output of the light generator 800 comprises a temporal sequence of red light, blue light, green light, blue light, which repeats as the phosphor wheel 804 and the color wheel 814 rotate.

In this manner, generation of mixed or transition colors that would otherwise occur when light from the phosphor wheel 804 passes through adjacent cyan and magenta segments 816 is reduced or avoided.

As with FIG. 6, the pump laser 802 and/or the blue laser 832 may be controlled with respect to intensity and/or duration of activation to control respective intensities of the red light, green light, and blue light, for example to achieve a desired white point. Furthermore, the timing relationships illustrated in FIG. 9 may be coordinated with display of corresponding bitplanes by the SLM 372.

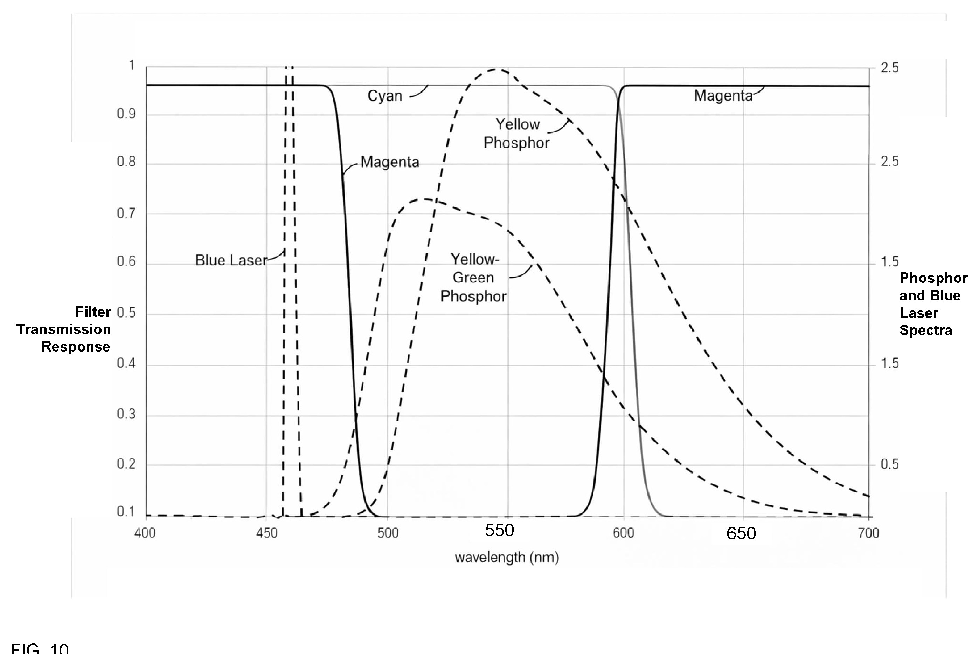

FIG. 10, FIG.11, FIG.12, FIG.13 and FIG. 14, as will next be described, illustrate spectral characteristics and filter responses associated with the light generator 800 including interactions between light generated by the phosphor wheel 804 and the color wheel segments 816, as well interactions as light generated by laser sources (e.g., blue laser 832 and the further laser 338) and the color wheel segments 816.

FIG. 10 illustrates an example color segment transmission response relative to phosphor emission spectra produced within the light generator 800. In particular, the plotted curves show the spectral output of one example of the blue laser 832 (e.g., at 455 nm) and phosphor-generated light from the yellow-green phosphor segments 806-1 and the yellow phosphor segments 806-2 from the phosphor wheel 804, in combination with transmission characteristics the cyan segments 816-1 and the magenta segments 816-2 of the color wheel 814. The transmission characteristics of the cyan segments 816-1 and the magenta segments 816-2 are configured to selectively pass or reject respective portions of the phosphor-generated light from the yellow-green phosphor segments 806-1 the yellow phosphor segments 806-2 so as to define desired color components, such as green light and red light, for subsequent modulation by the spatial light modulator 372. As shown, the transmission bands of the cyan segments 816-1 and the magenta segments 816-2 are aligned with respective spectral regions phosphor-generated light from the yellow-green phosphor segments 806-1 the yellow phosphor segments 806-2, and the blue light from the blue laser 832. Indeed, it is understood that the "100 %" transmission band of the magenta segments 816-2 and the cyan segments 816-1 both extend into the spectral region of the blue light from the blue laser 832.

FIG. 11 illustrates the example emission spectra of FIG. 10 in more detail. In particular, FIG. 11 shows the emission spectra of different phosphor materials that may be employed with the phosphor wheel 804 (e.g., and/or the phosphor wheels 304, 504), for the yellow-green phosphor segments 806-1, and for the yellow phosphor segments 806-2. In particular, FIG. 11 compares a yellow phosphor emission profile with a yellow-green phosphor emission profile. These phosphor responses may be selected in conjunction with the transmission profiles of the magenta and cyan color segments 816 to tailor the spectral distribution of light filtered by the color wheel 814.

FIG. 12 illustrates example transmission characteristics of the magenta and cyan color segments 816 of FIG. 9 in more detail. In particular, FIG. 12 further illustrates that the magenta segments 816-2 pass longer wavelengths above about 600 nm (e.g., red light) while attenuating shorter wavelengths between about 500 nm and 600 nm, but also passes wavelengths below about 500 nm. In this manner the magenta segments 816-2 filter the yellow light from the yellow phosphor segments 806-2 to produce red light while also passing the blue light from the blue laser 832, and red light from the further laser 838. Similarly, FIG. 12 further illustrates that the cyan segments 816-1 passes shorter wavelengths below about 530 nm (e.g., green light) while attenuating longer wavelengths between about 530 nm. In this manner the cyan segments 816-1 filter the yellow-green light from the yellow-green phosphor segments 806-1 to produce green light while also passing the blue light from the blue laser 832, and green light from the further laser 838.

FIG. 13 again shows the transmission characteristics of the magenta and cyan color segments 816 in combination with the blue light from the blue laser 832 and the resulting spectral characteristics of the filtered green light and red light that results from the spectra of the yellow-green phosphor segments 806-1 and the yellow phosphor segments 806-2 from the phosphor wheel 804 (e.g., of FIG. 12) passing respectively through the magenta and cyan color segments 816. The illustrated curves demonstrate how the transmission characteristics of the magenta and cyan color segments 816 overlap with the spectral red light and green light outputs to define transmitted red and green color channels in combination with the transmitted blue color channel. In some examples, these transmission characteristics may be selected to maximize luminous efficiency. Alternatively, or in addition, the transmission characteristics may be selected to achieve a given color gamut, a given white point of the projection system 370, and/or a given system efficiency (e.g., maximum brightness of light output by the projection system 370).

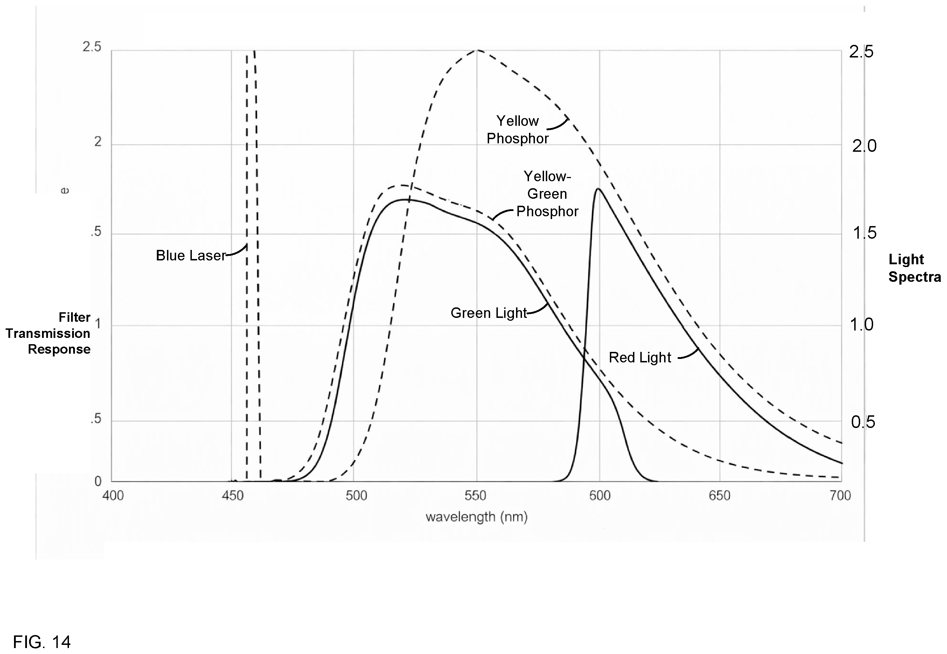

FIG. 14 compares the emission spectra of the yellow and yellow-green phosphor spectra (e.g., of FIG.12) with the spectral characteristics of the filtered red light and green light (e.g., of FIG. 13), as well as the blue light from the blue laser 832. Indeed, FIG. 14 again illustrates the resulting transmitted red and green color channels in combination with the transmitted blue color channel.

Hence, FIG. 10, FIG.11, FIG.12, FIG.13 and FIG. 14 illustrate that the spectral characteristics of the phosphor emissions from the phosphor wheel 804 and the blue light from the blue laser 832, in combination with the transmission properties of the cyan and magenta segments of the color wheel 814, are selected and aligned such that the phosphor-generated light is filtered to produce respective red and green light while the blue light is transmitted through respective segment types, thereby enabling generation of red, green, and blue light with reduced spectral overlap and improved color separation.

It is further understood that, similar to the light generator 300 of FIG. 3, the light generator 800 may also be adapted to include only one phosphor at the phosphor wheel 304, with the cyan and magenta segments 806 light output by the only one phosphor (e.g. that emits yellow light) to respectively generate green light and red light (though at possibly a lower efficiency than when the phosphor wheel 304 includes alternating yellow-green and yellow phosphor segments.

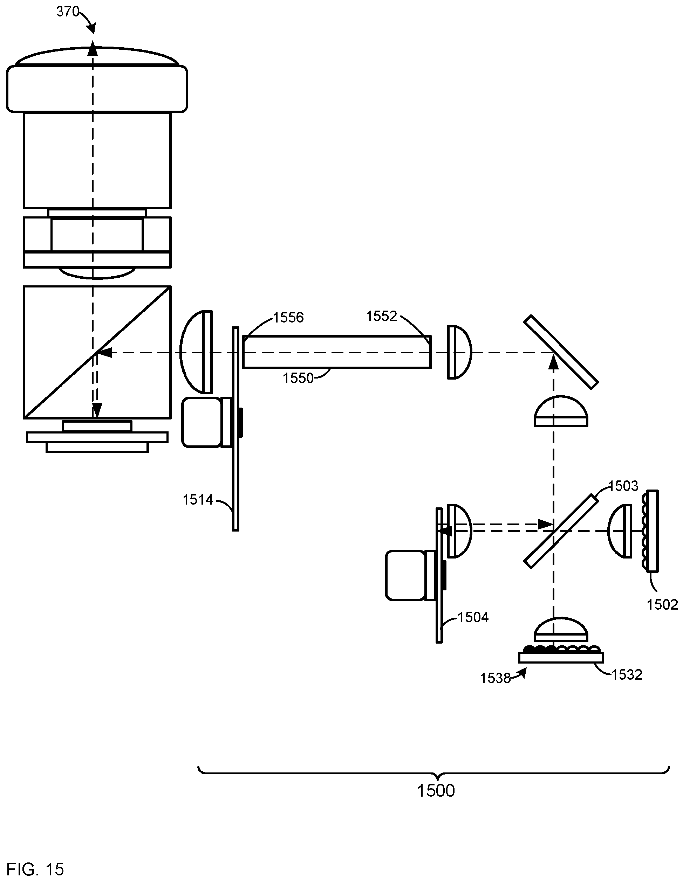

Other examples of a laser-phosphor based light generator with a color wheel that includes cyan and magenta segments that are within the scope of the present specification are next described with respect to FIG. 15 to FIG. 20.

While not described, each of the light generators of FIG. 15 to FIG. 20, may include a controller, memory and programming instructions similar to as described with respect to the light generators 300, 400. Furthermore, while not all components are shown and/or are numbered for simplicity, it is understood that the light generators of FIG. 15 to FIG. 20 include any suitable optics and/or integration components, similar to as described with respect to the to the light generators 300, 400, 500. It is further understood that it is understood that the light generators of FIG. 15 to FIG. 20 are illustrated with the projection system 370 interfacing with the light generators. Furthermore, optical paths of light through the light generators of FIG. 15 to FIG. 20 and the projection system 370 are depicted as dashed arrows.

It is further understood that the light generators of FIG. 15 to FIG. 20 may be controlled in a similar manner as described with respect to the timing diagram of FIG. 6 and/or FIG. 9, to output red, green and blue light, and with similar control of lasers, color wheels and phosphor wheels with respect to spokes of color wheels.

Attention is next directed to FIG. 15, which depicts a light generator 1500 according to further non-limiting examples. The light generator 1500 may be similar to one or more of the light generators described herein, with like components having like numbers but in a "1500" series.

In particular, the light generator 1500 comprises a pump laser 1502, a phosphor wheel 1504, a color wheel 1514, a blue laser 1532 (and an optional further laser 1538), and an integrator 1550, having an input face 1552 and an opposite output face 1556. The light generator 1500 is similar to the light generator 800, however, in this example, the color wheel 1514 is located at the output face 1554 of the integrator 1550 (e.g., rather than at the input face 1552 as in the light generator 800).

In particular, it is understood that the light generator 1500 includes a dichroic 1503, and the like (e.g., any suitable filter) configured to: transmit pump (e.g., blue) light from pump laser 1502 towards the phosphor wheel 1504; reflect phosphor light generated from the phosphor wheel 1504 towards optical components that in turn guide the phosphor light to the input face 1552 of the integrator 1550; and transmit light from the blue laser 1532 and the optional further laser 1538 towards the same optical components used to guide the phosphor light to the input face 1552 of the integrator 1550, such that these optical components also guide the light from the blue laser 1532 and the optional further laser 1538 to the input face 1552 of the integrator 1550.

It may, however, be difficult to configure such a dichroic 1503 to transmit green laser light from the optional further laser 1538. For example, as the dichroic 1503 may generally be at about 45 degrees relative to the lasers 1502, 1532, 1538 and the phosphor wheel 1504 to provide the described functionality, to use the dichroic 1503 with green light that may be emitted by the optional further laser 1538, the dichroic 1503 may combine broadband reflector properties (e.g., to reflect the phosphor light), with a narrow green band notch filter to combine the green laser light with the broad band phosphor light as well as a narrow blue band notch filter to transmit blue light from the blue laser 1502. This may be difficult to achieve, however, though easier with red light (e.g., a narrow red band notch filter combined with a narrow blue band notch filter and broad band reflector properties may be easier to achieve).

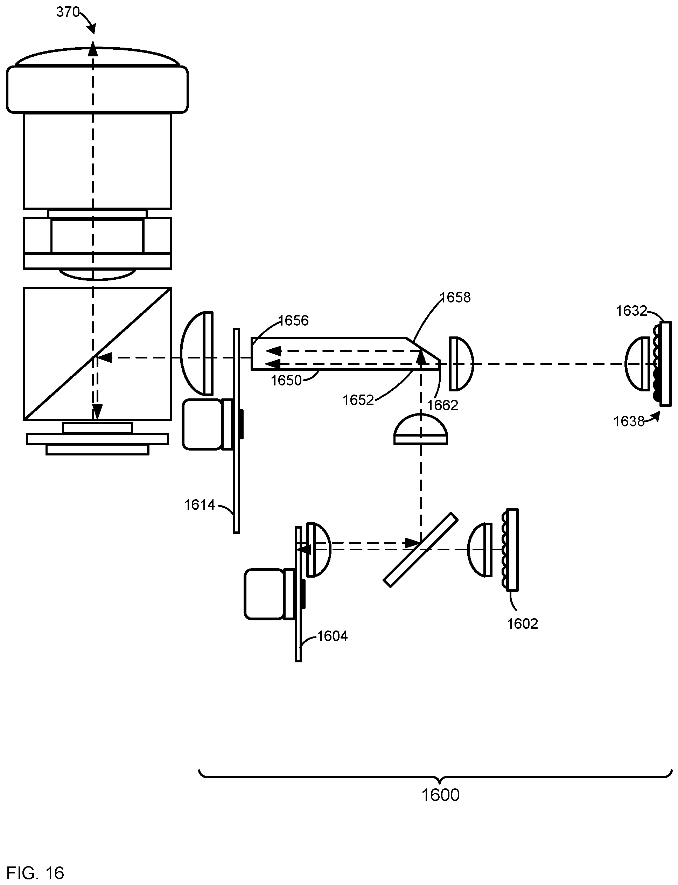

Attention is next directed to FIG. 16, which depicts a light generator 1600 according to further non-limiting examples. The light generator 1600 may be similar to one or more of the light generators described herein, with like components having like numbers but in a "1600" series.

In particular, the light generator 1600 comprises a pump laser 1602, a phosphor wheel 1604, a color wheel 1614, a blue laser 1632 (and an optional further laser 1638), and an integrator 1650, having an input face 1652 and an opposite output face 1656. However, in this example, the integrator 1650 includes a chamfer 1658 (e.g., of about 45°), similar to the chamfer 358 of the integrator 350, so that the phosphor light from the phosphor wheel 1604 enters the integrator 1650 perpendicular to the output face 1656 and is reflected towards the sidewalls of the integrator 1650 and/or the output face 1656.

As depicted, the integrator 1650 includes a second input face 1662 opposite the output face 1656, formed by configuring the chamfer 1658 so that the chamfer 1658 does not extend directly between the sidewalls of the integrator 1650, and/or by configuring the chamfer 1658 so that the chamfer 1658 extends from a side wall to about two-thirds to three-quarters along an end of the integrator 1650 opposite the output face 1656 that forms the second input face 1662.

In this manner the integrator 1650 may be used to combine the phosphor light from the phosphor wheel 1604 and the blue light from the blue laser 1632, and/or red light and/or green light from the further laser 1638.

Indeed, the configuration of the light generator 1600 further avoids use of a dichroic and/or notch filter and the like to combine, and the like, the phosphor light from the phosphor wheel 1604 and the blue light from the blue laser 1632, and/or red light and/or green light from the further laser 1638 as in the light generators 800, 1500. In particular, such dichroics and/or notch filters may be particularly challenging to configure to reflect the phosphor light, as well as transmit the light from the pump laser 1602, the blue light from the blue laser 1632 and the red and/or green light from the further laser 1638, especially when the green light from the further laser 1638.

Furthermore, the configuration c may enable a larger color gamut (e.g., a P3 color gamut) when the further laser 1638 is configured to emit red and green light. Furthermore, respective light from the phosphor wheel 1604 and further laser 1638 may combined by dividing an etendue at the integrator 1650 by an amount needed by each source of light.

In particular, respective light from the phosphor wheel 1604 and the further laser 1638 may be combined by allocating portions of an available etendue of the integrator 1650 to each source of light. For example, the phosphor light and the light from the further laser 1638 may be introduced into the integrator 1650 at different input angles and/or spatial regions such that the combined light remains within an overall etendue supported by the integrator 1650 and the projection system 370. In general, a total etendue of the projection system 370 is defined by the SLM 372 (e.g., a DMD, the f-number (e.g., f/# and/or aperture value) of the SLM 372, and an area of the SLM 372. This total etendue may not be exceeded by light produced by light generators provided herein, or such light will be lost. These conditions apply to all light generators provided herein. The etendue of the light generators provided herein may be split at the inputs to the integrator 1650, and the large f/# (small angles) laser input may be provided to the smaller input face 1662, using only a small part of the available etendue. The remaining etendue is provided to the larger input face 1652 used by the phosphor light generated at the phosphor wheel 1604.

As used herein, "P3 color gamut" refers to a color space defined by Digital Cinema Initiatives (DCI), often referred to as DCI-P3, which specifies a set of color primaries and a corresponding color gamut that is wider than a color gamut defined by Rec. 709 (Recommendation ITU-R BT.709) is an international standard that defines how high-definition television (HDTV) video is formatted, encoded, and displayed).

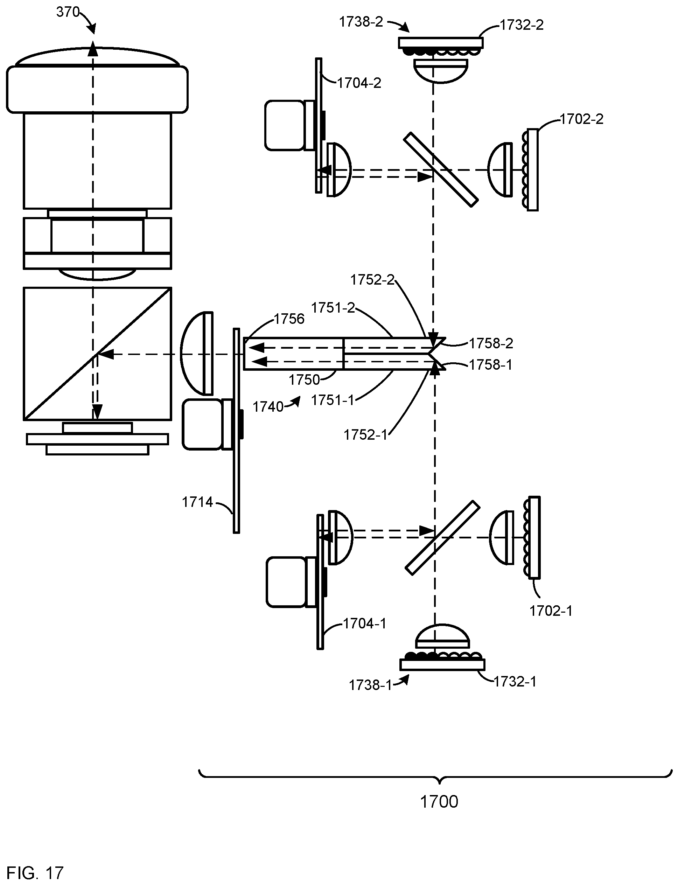

Attention is next directed to FIG. 17, which depicts a light generator 1700 according to further non-limiting examples. The light generator 1700 may be similar to one or more of the light generators described herein, with like components having like numbers but in a "1700" series.

In particular, the light generator 1700 comprises two pump lasers 1702-1, 1702-2, two phosphor wheels 1704-1, 1704-2, one color wheel 1714, two blue lasers 1732-1, 1732-2 (and/or two optional further lasers 1738-1, 1738-2), and an integrator 1740 comprising a main integrator 1750 optically coupled to two other integrators 1751-1 and 1751-2 that have respective input faces 1752-1, 1752-2 perpendicular to an output face 1756 of the main integrator 1750. The integrators 1751-1, 1751-2 include respective chamfers 1758-1, 1758-2 468 (e.g., of about 45° each), similar to the chamfers 358, 1658 though extending between sidewalls of the 1751-1751-2. While the main integrator 1750 and the integrators 1751 are depicted as being separate from each other, and assembled to form the integrator 1740, the main integrator 1750 and the integrators 1751 may be provided as an integral component (e.g., with the chamfers 1758 formed at an end of such an integral component).

In general, the light generator 1700 includes two groups of a pump laser 1702, a phosphor wheel 1704, and a blue laser 1732 (and/or an optional further laser 1738), and associated optics, arranged (e.g., symmetrically) on opposite sides of the integrator 1740, with each group arranged to provide light into a respective input face 1752 of the integrator 1740. A respective chamfer 1758 directs the light towards the output face 1756. The common color wheel 1714, located at the output face 1756, filters light from the phosphor wheels 1704, the blue lasers 1732 (and/or the optional further lasers 1738) as described herein with respect to other light generators. It is understood that rotation of the phosphor wheels 1704, as well as control of the lasers 1702, 1732, 1738, are coordinated so that each group is inputting a same color light into a respective input face 1758 at any given time (e.g., according to the timing diagram of FIG. 9).

In this manner, intensity and/or power of the light output by the light generator 1700 may be doubled relative to other light generators described herein. Alternatively, or in addition, the lasers 1702, 1732, 1738 may be operated at lower powers relative to other light generators described herein and achieve a similar intensity and/or power of light output, which may extend a life of the lasers 1702, 1732, 1738 and/or the phosphor wheels 1704.

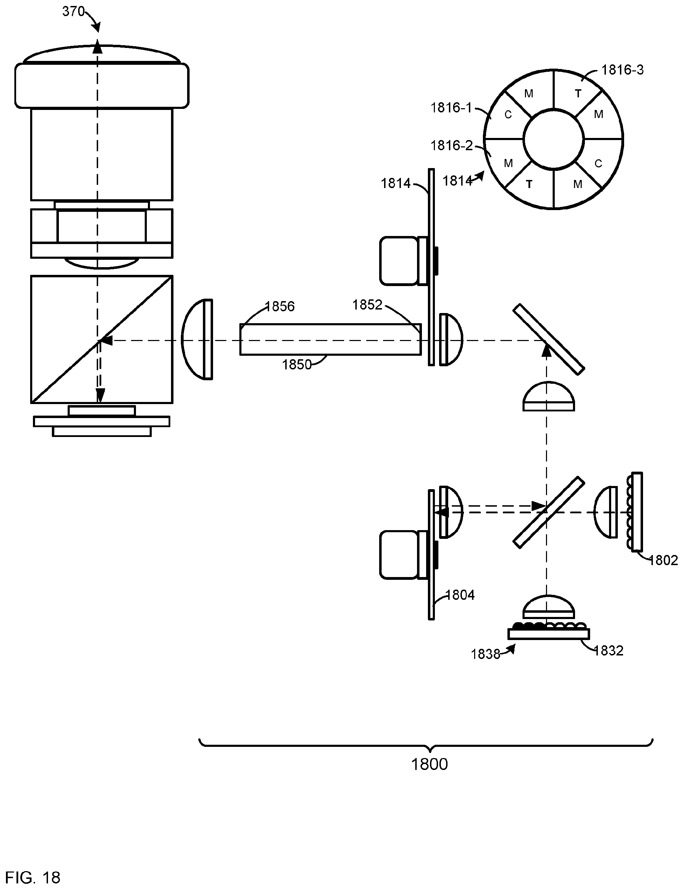

Attention is next directed to FIG. 18, which depicts a light generator 1800 according to further non-limiting examples. The light generator 1800 may be similar to one or more of the light generators described herein, with like components having like numbers but in a "1800" series.

In particular, the light generator 1800 comprises a pump laser 1802, a phosphor wheel 1804, a color wheel 1814, a blue laser 1832 (and an optional further laser 1838), and an integrator 1850, having an input face 1852 and an output face 1856. The light generator 1800 is similar to the light generator 800, however, in this example, the color wheel 1814 includes cyan segments 1816-1, magenta segments 1816-2 (e.g., separated by spokes) and one or more transparent and/or clear segments 1816-3 (e.g., transparent to the phosphor light, blue light, green light and red light.

Such configuration enables yellow light (e.g., "Y") from the phosphor wheel 1804 to pass through the color wheel 1814, enabling a four color RGBY light generation, with the projection system 370 adapted accordingly. In this example, the pump laser 1802 and the blue laser 1832 may or may not be controlled according to whether a spoke is approaching and/or in a color wheel illumination zone as blue light in the light generator 1800 may be provided via the transparent and/or clear segments 1816-3. Such an RGBY light generator may allow for a 15% to 25% increase in brightness relative to other light generators provided herein. The addition of yellow may impact a color cycle rate however, leading to a tradeoff between color cycle rate and brightness. In particular, inclusion of the yellow light may reduce a color cycle rate due to an increased number of color segments 1816, which may increase color breakup artifacts, thereby representing a trade-off between brightness and temporal color performance.

While as depicted the color wheel 1814 is located at the input face 1852 of the integrator 1850, in other examples the color wheel 1814 may be located the output face 1856 of the integrator 1850.

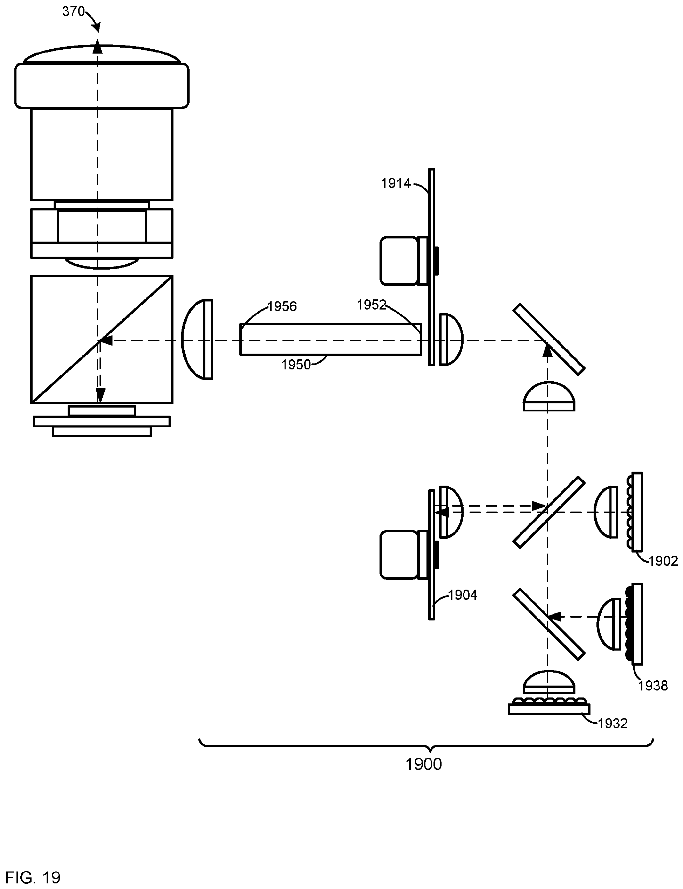

Attention is next directed to FIG. 19, which depicts a light generator 1900 according to further non-limiting examples. The light generator 1900 may be similar to one or more of the light generators described herein, with like components having like numbers but in a "1900" series.

The light generator 1900 includes a pump laser 1902, a phosphor wheel 1904, and a color wheel 1914. The light generator 1900 further includes a light integrator 1950 having an input face 1952 and an output face 1956.

The light generator 1900 further includes a blue laser 1932, and a further laser 1938, configured to emit, for example, red light, and the lasers 1932, 1938 are arranged to provide blue light and red light along a similar optical path toward the color wheel 1914. In particular, a filter (e.g., a dichroic mirror) that transmits pump laser light from the pump laser 1902 to an illumination region of the phosphor wheel 1904, and reflects phosphor-generated light along an optical path toward the color wheel 1914, is configured to transmit both blue light from the blue laser 1932 and red light from the further laser 1938 along the same optical path. In this manner, the blue light and the red light are combined with phosphor-generated light prior to reaching the color wheel 1914 and the integrator 1950.

In such a configuration, red light in the light generator 1900 may be enhanced relative to some other light generators provided herein, and the light generator 1900 may assist with red light intensity, as yellow phosphor may generate less red light as compared to green light generated by a yellow-green phosphor. In these examples, it is further understood that magenta segments of the color wheel 1914 transmit the red light from the further laser 1938, and the further laser 1938 may be turned off while cyan segments of the color wheel 1914 are in the color wheel illumination zone.

Alternatively, or in addition, the further laser 1938 may be configured to emit green light, though dichroics in the light generator 1900 may be difficult to adapt for such green light, as has been previously described. In this example, it is understood that cyan segments of the color wheel 1914 transmit green light from the further laser 1938, and the further laser 1938 may be turned off while magenta segments of the color wheel 1914 are in the color wheel illumination zone.

In some examples, operation of the further laser 1938 may be coordinated with operation of the pump laser 1902 and/or the blue laser 1932.

Attention is next directed to FIG. 20, which depicts a light generator 2000 according to further non-limiting examples. The light generator 2000 may be similar to one or more of the light generators described herein, with like components having like numbers but in a 2000 series.

The light generator 2000 includes a pump laser 2002, a phosphor wheel 2004, and a color wheel 2014. The light generator 2000 further includes a light integrator 2050 having an input face 2052 and an output face 2056.

A blue laser 2032 is arranged to provide blue light along an optical path toward the phosphor wheel 2004 and/or the color wheel 2014. A further laser 2038 is arranged to provide light into the light integrator 2050 downstream of the color wheel 2014. In particular, the further laser 2038 may be configured to inject light via a chamfer 2058 468 (e.g., of about 45°) of the light integrator 2050, similar to other chamfered integrators described herein.

The further laser 2038 may be configured to emit one or more of red light and green light. In this manner, red light and/or green light from the further laser 2038 may be combined with light that has passed through the color wheel 2014 within the light integrator 2050. In particular, this arrangement avoids the use of dichroics to combine red light and green light from the further laser 2038 with light from the phosphor wheel 2004 and/or the blue laser 2032.

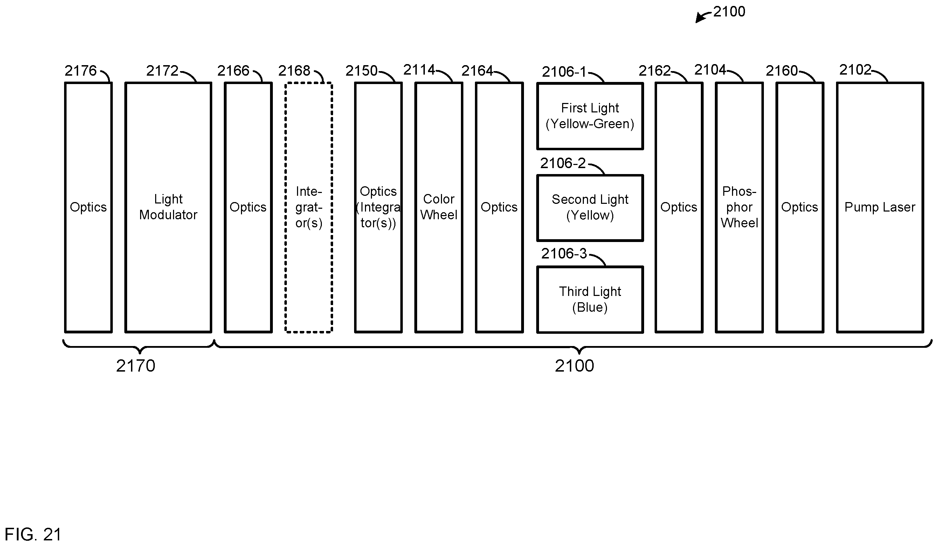

Attention is next directed to FIG. 21 to FIG. 24, which respectively depict block diagrams of light generators provided herein. The light generators of FIG. 21 to FIG. 24 may be generally similar in operation to other light generators described herein, for example with respect to the timing diagrams of FIG. 6 and/or FIG. 9 similar control of lasers, color wheels and phosphor wheels with respect to spokes of color wheels. The light generators of FIG. 21 to FIG. 24 may be adapted for phosphors wheels having any suitable alternating phosphor segments, that emit any suitable colors of light, and color wheels having any suitable alternating phosphor segments of any suitable colors separated by spokes.

While not described, each of the light generators of FIG. 21 to FIG. 24, may include a controller, memory and programming instructions similar to as described with respect to the light generators 300, 400.

Attention is next directed to FIG. 21, which depicts a block diagram of the optical components of a light generator 2100 that may be substantially similar to one or more of the light generators described herein, with like components having like numbers but in a "2100" series, though the light generator 2100 may be adapted for phosphors wheels having any suitable alternating phosphor segments, that emit any suitable colors of light, and color wheels having any suitable alternating phosphor segments of any suitable colors separated by spokes. The light generator 1500 of FIG. 15 and/or light generator 1700 of FIG. 17 may have a configuration similar to the light generator 2100.

As depicted, the light generator 2100 comprises: a pump laser 2102; a phosphor wheel 2104, which is understood to include alternating phosphor segments (not depicted, but similar to the alternating phosphor segments 306) that emit first light 2106-1 (e.g., as depicted, yellow-green light) and second light 2106-2 (e.g., as depicted, yellow light) at different wavelengths and/or wavelength spectra when respectively illuminated by the pump laser 2102; and a color wheel 2114 comprising alternating color segments of a first color and a second color (not depicted, but similar to the alternating color segments 316), the color wheel 2114 being arranged to receive the first light 2106-1 and the second light 2106-2 in a color wheel illumination region (not depicted) through which the alternating color segments rotate, and the alternating color segments of the first color and the second color respectively filter the first light and the second light. While such filtering is not shown in FIG. 21, it is understood that such filtering occurs. The light generator 2100 further includes optics 2150 that may include an integrator.

Furthermore, also shown in FIG. 21 is insertion of third light 2106-3 (e.g., blue light, and/or any other suitable color), before the color wheel 2114 (e.g., as in the light generators of FIG. 15 to FIG. 20). Hence it is understood that, while not depicted, a blue laser and/or a further laser (e.g., respectively similar to the blue laser 332 and/or the further laser 338) may be used to generate the third light 2106-3.

As depicted, the light generator 2100 includes any suitable optics 2160, 2162, 2164, 2166 for directing light within the light generator 2100, and which may be similar to, or different from, the optics of any of the light generators as described herein. As depicted, the light generator 2100 optionally includes any suitable at least one further integrator component 2168, which may be similar to, or different from, the at least one light integration component 364.

While not depicted, it is understood that the light generator 2100 may include a controller (e.g., similar to the controller 340) configured to: turn the pump laser 2102 off and the blue and/or further laser on as a spoke, joining a first color segment and a second color segment of the color wheel 2114, approaches a color wheel illumination region of the color wheel 2114; and turn the pump laser 2102 on and the blue and/or further laser off when the spoke is no longer in the color wheel illumination region.

The light generator 1800 of FIG. 18 may have a configuration similar to the light generator 2100, though adapted for transparent color wheel segments.

As depicted, the light generator 2100 outputs light to a projection system 2170 that includes a spatial light modulator 2172 and optics 2176, which may be substantially similar, respectively, to the projection system 370, the spatial light modulator 372 and the optics 376.

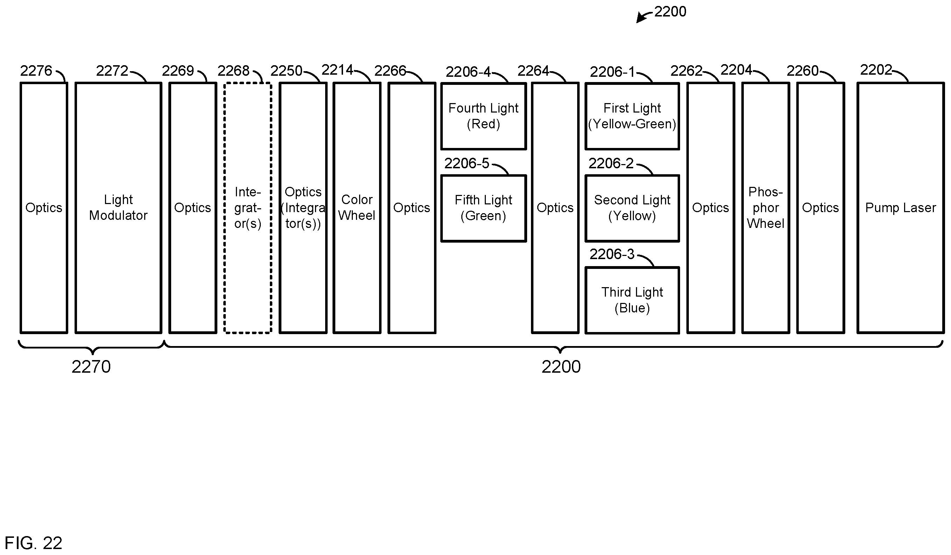

Attention is next directed to FIG. 22, which depicts a block diagram of the optical components of a light generator 2200 that may be substantially similar to one or more of the light generators described herein, with like components having like numbers but in a "2200" series, though the light generator 2200 may be adapted for phosphors wheels having any suitable alternating phosphor segments, that emit any suitable colors of light, and color wheels having any suitable alternating phosphor segments of any suitable colors separated by spokes. The light generator 800 of FIG. 8, the light generator 1500 of FIG. 15 and the light generator 1600 of FIG.16 may have a configuration similar to the light generator 2200.

As depicted, the light generator 2200 comprises: a pump laser 2202; a phosphor wheel 2204, which is understood to include alternating phosphor segments (not depicted, but similar to the alternating phosphor segments 306) that emit first light 2206-1 (e.g., as depicted, yellow-green light) and second light 2206-2 (e.g., as depicted, yellow light) at different wavelengths and/or wavelength spectra when respectively illuminated by the pump laser 2202; and a color wheel 2214 comprising alternating color segments of a first color and a second color(not depicted, but similar to the alternating color segments 316), the color wheel 2214 being arranged to receive the first light 2206-1 and the second light 2206-2 in a color wheel illumination region (not depicted) through which the alternating color segments rotate, and the alternating color segments of the first color and the second color respectively filter the first light and the second light. While such filtering is not shown in FIG. 22, it is understood that such filtering occurs. The light generator 2200 further includes optics 2250 that may include an integrator.

Furthermore, also shown in FIG. 22 is that insertion of third light 2206-3 (e.g., blue light, and/or any other suitable color), occurs before the color wheel 2214 (e.g., as in the light generators of FIG. 8, FIG. 15 to FIG. 20). Hence it is understood that, while not depicted, a blue laser and/or a further laser (e.g., respectively similar to the blue laser 332 and/or the further laser 338) may be used to generate the third light 2206-3.

As further depicted, insertion of fourth light 2206-4 and/or fifth light 2206-4 (e.g., red light, and/or green light, and/or any other suitable color(s)), occurs before the color wheel 2214, but according to additional optics at least partially different from the optics used with the first light 2206-1, the second light 2206-2, and the third light 2206-3, similar to as occurs in the light generator 1600 of FIG. 16.

As depicted, the light generator 2200 includes any suitable optics 2260, 2262, 2264, 2266, 2269 for directing light within the light generator 2200, and which may be similar to, or different from, the optics of any of the light generators as described herein. As depicted, the light generator 2200 optionally includes any suitable at least one further integrator component 2268, which may be similar to, or different from, the at least one light integration component 364.

While not depicted, it is understood that the light generator 2200 may include a controller (e.g., similar to the controller 340) configured to: turn the pump laser 2202 off and the blue and/or further laser on as a spoke, joining a first color segment and a second color segment of the color wheel 2214, approaches a color wheel illumination region of the color wheel 2214; and turn the pump laser 2202 on and the blue and/or further laser off when the spoke is no longer in the color wheel illumination region.

As depicted, the light generator 2200 outputs light to a projection system 2270 that includes a spatial light modulator 2272 and optics 2276, which may be substantially similar, respectively, to the projection system 370, the spatial light modulator 372 and the optics 376.

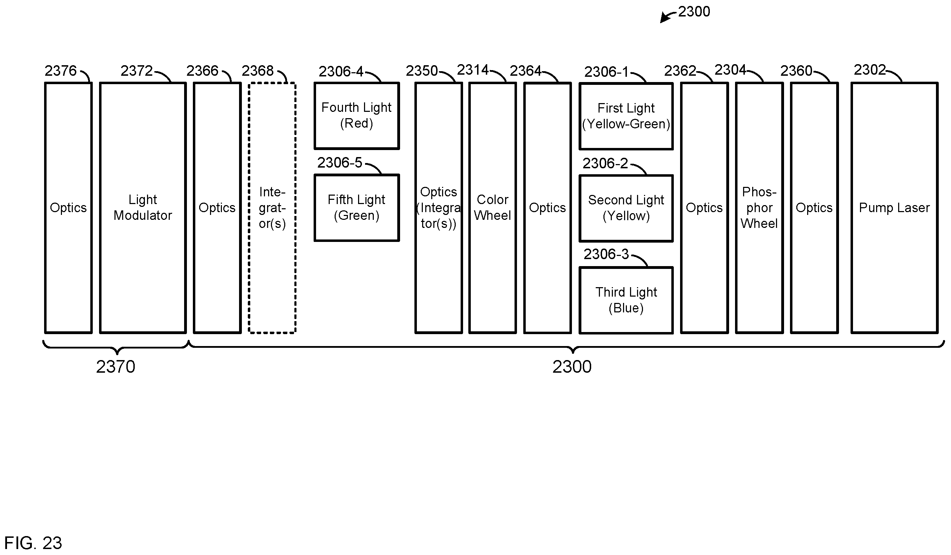

Attention is next directed to FIG. 23, which depicts a block diagram of the optical components of a light generator 2300 that may be substantially similar to one or more of the light generators described herein, with like components having like numbers but in a "2300" series, though the light generator 2300 may be adapted for phosphors wheels having any suitable alternating phosphor segments, that emit any suitable colors of light, and color wheels having any suitable alternating phosphor segments of any suitable colors separated by spokes. The light generator 2000 of FIG. 20 may have a configuration similar to the light generator 2300.

As depicted, the light generator 2300 comprises: a pump laser 2302; a phosphor wheel 2304, which is understood to include alternating phosphor segments (not depicted, but similar to the alternating phosphor segments 306) that emit first light 2306-1 (e.g., as depicted, yellow-green light) and second light 2306-2 (e.g., as depicted, yellow light) at different wavelengths and/or wavelength spectra when respectively illuminated by the pump laser 2302; and a color wheel 2314 comprising alternating color segments of a first color and a second color(not depicted, but similar to the alternating color segments 316), the color wheel 2314 being arranged to receive the first light 2306-1 and the second light 2306-2 in a color wheel illumination region (not depicted) through which the alternating color segments rotate, and the alternating color segments of the first color and the second color respectively filter the first light and the second light. While such filtering is not shown in FIG. 23, it is understood that such filtering occurs. The light generator 2300 further includes optics 2350 that may include an integrator.

Furthermore, also shown in FIG. 23 is that insertion of third light 2306-3 (e.g., blue light, and/or any other suitable color) occurs before the color wheel 2314 (e.g., as in the light generators of FIG. 15 to FIG. 20). Hence it is understood that, while not depicted, a blue laser and/or a further laser (e.g., respectively similar to the blue laser 332 and/or the further laser 338) may be used to generate the third light 2306-3.

As further depicted, insertion of fourth light 2306-4 and/or fifth light 2306-4 (e.g., red light, and/or green light, and/or any other suitable color(s)), occurs after the color wheel 2314 and/or downstream from the color wheel 2314 (e.g., on an optical path of light through the light generator 2300), similar to as occurs in the light generator 2000 of FIG. 20.

As depicted, the light generator 2300 includes any suitable optics 2360, 2362, 2364, 2366 for directing light within the light generator 2300, and which may be similar to, or different from, the optics of any of the light generators as described herein. As depicted, the light generator 2300 optionally includes any suitable at least one further integrator component 2368, which may be similar to, or different from, the at least one light integration component 364.

While not depicted, it is understood that the light generator 2300 may include a controller (e.g., similar to the controller 340) configured to: turn the pump laser 2302 off and the blue and/or further laser on as a spoke, joining a first color segment and a second color segment of the color wheel 2314, approaches a color wheel illumination region of the color wheel 2314; and turn the pump laser 2302 on and the blue and/or further laser off when the spoke is no longer in the color wheel illumination region.

As depicted, the light generator 2300 outputs light to a projection system 2370 that includes a spatial light modulator 2372 and optics 2376, which may be substantially similar, respectively, to the projection system 370, the spatial light modulator 372 and the optics 376.

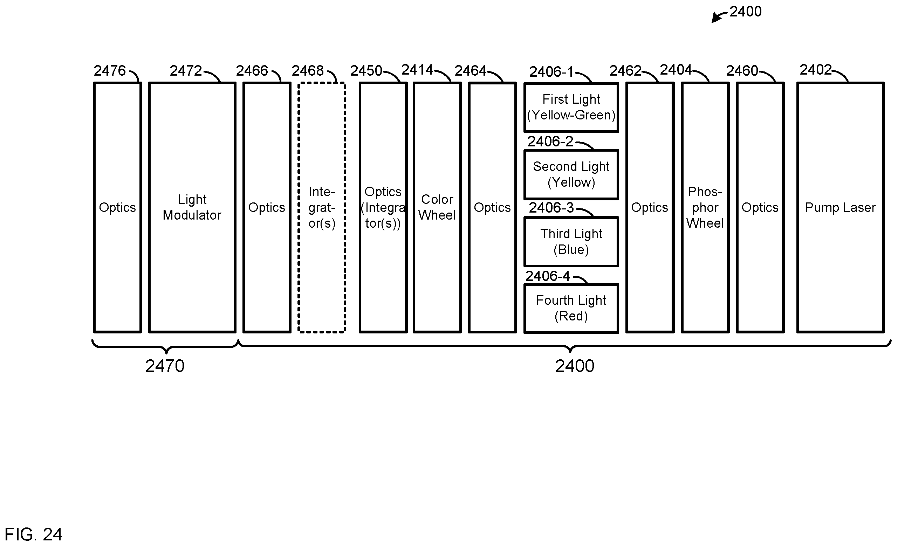

Attention is next directed to FIG. 24, which depicts a block diagram of the optical components of a light generator 2400 that may be substantially similar to one or more of the light generators described herein, with like components having like numbers but in a "2300" series, though the light generator 2400 may be adapted for phosphors wheels having any suitable alternating phosphor segments, that emit any suitable colors of light, and color wheels having any suitable alternating phosphor segments of any suitable colors separated by spokes. The light generator 1900 of FIG. 19 may have a configuration similar to the light generator 2400.

As depicted, the light generator 2400 comprises: a pump laser 2402; a phosphor wheel 2404, which is understood to include alternating phosphor segments (not depicted, but similar to the alternating phosphor segments 306) that emit first light 2406-1 (e.g., as depicted, yellow-green light) and second light 2406-2 (e.g., as depicted, yellow light) at different wavelengths and/or wavelength spectra when respectively illuminated by the pump laser 2402; and a color wheel 2414 comprising alternating color segments of a first color and a second color(not depicted, but similar to the alternating color segments 316), the color wheel 2414 being arranged to receive the first light 2406-1 and the second light 2406-2 in a color wheel illumination region (not depicted) through which the alternating color segments rotate, and the alternating color segments of the first color and the second color respectively filter the first light and the second light. While such filtering is not shown in FIG. 24, it is understood that such filtering occurs. The light generator 2400 further includes optics 2450 that may include an integrator.

Furthermore, also shown in FIG. 24 is insertion of third light 2406-3 (e.g., blue light, and/or any other suitable color) and fourth light 2406-4 (e.g., red light and/or any other suitable color) occurs before the color wheel 2414 (e.g., as in the light generators of FIG. 15 to FIG. 20). Hence it is understood that, while not depicted, a blue laser and/or a further laser (e.g., respectively similar to the blue laser 332 and/or the further laser 338) may be used to generate the third light 2406-3 and the fourth light 2406-4.

As depicted, the light generator 2400 includes any suitable optics 2460, 2462, 2464, 2466 for directing light within the light generator 2400, and which may be similar to, or different from, the optics of any of the light generators as described herein. As depicted, the light generator 2400 optionally includes any suitable at least one further integrator component 2468, which may be similar to, or different from, the at least one light integration component 364.

While not depicted, it is understood that the light generator 2400 may include a controller (e.g., similar to the controller 340) configured to: turn the pump laser 2402 off and the blue and/or further laser on as a spoke, joining a first color segment and a second color segment of the color wheel 2414, approaches a color wheel illumination region of the color wheel 2414; and turn the pump laser 2402 on and the blue and/or further laser off when the spoke is no longer in the color wheel illumination region.

As depicted, the light generator 2400 outputs light to a projection system 2470 that includes a spatial light modulator 2472 and optics 2476, which may be substantially similar, respectively, to the projection system 370, the spatial light modulator 372 and the optics 376.

Attention is next directed to FIG. 25A and FIG. 25B which depicts examples of integration systems 2500-1, 2500-2 that include respective integrator devices 2502-1, 2502-2 similar to the integrator device 440, and respective fly's eye integrators 2504-1, 2504-2. In other words, the examples of FIG. 25A and FIG. 25B may be similar to those shown in in FIG. 3 or FIG. 4, when the further integrator component 364 comprises a fly's eye integrator.

Furthermore, while as depicted the fly's eye integrators 2504-1, 2504-2 each comprise a pair of single sided array on lenslets, and/or facets, arranged facing away from each other, in other examples, one or both of the fly's eye integrators 2504-1, 2504-2 may comprise one single sided array of lenslets, and/or facets. Indeed, any suitable fly's eye integrators are within the scope of the present specification and/or lenslets, and/or facets of such fly's eye integrators may be facing in any suitable direction.

Attention is first directed to FIG. 25A, which depicts an integration system 2500-1 that comprises a two component integrator device 2502-1 comprising plurality of integrators (e.g., integrating rods) including a first integrator 2550 and a second integrator 2560, the second integrator 2560 adjacent the first integrator 2550 (e.g., and/or stacked on the first integrator 2550 and/or arranged lengthwise, relative to the first integrator 2550, in any suitable manner). Indeed, as depicted, the plurality of integrators may comprises more than two integrators (e.g., as described with respect to FIG. 25C and FIG. 25D) arranged side-by-side in a lateral array, and/or at least two integrators arranged adjacent each other, each having substantially parallel longitudinal axes (e.g., an axis perpendicular to respective output faces thereof). Indeed, such integrators are understood to comprise a respective elongated integrator rod configured to homogenize light via internal reflections.

The first integrator 2550 comprises an input face 452 and an opposite output face 2556.

The second integrator 2560 comprises an input face 2562 and an output face 2566, with the input face 2562 being arranged on a side of the second integrator 2560 perpendicular to the output face 2566. The second integrator 2560 further includes a chamfer 2568 on a side opposite the input face 2562.

Furthermore, as depicted, the output faces 2556, 2566 are aligned and/or are parallel to each other and/or are adjacent to each other.

Referring back the first integrator 2550, the input face 2552 may receive light 2572 (e.g., red light and green light, in a sequence) from the combination of a phosphor wheel and a color wheel, similar to as descried with respect to FIG. 4, the first integrator 2550 integrates such light 2570, and the output face 2556 outputs such light 2570, as integrated, to the fly's eye integrator 2504-1.

Similarly, and now referring to the second integrator 2560, the input face 2562 is arranged to receive light 2572 from, for example a blue laser and/or a further laser, similar to as described with respect to FIG. 4. The chamfer 2568 directs such light 2572 into the second integrator 2560 and/or towards the output face 2566, the second integrator 2560 integrating such light 2572 for output at the output face 2566, to the at least one light fly's eye integrator 2504-1.

Hence, both the integrated light 2570 and the integrated light 2572 are output to the fly's eye integrator 2504-1 (e.g., sequentially), which further integrates the integrated light 2570 and the integrated light 2572 for output to a projection system, similar to the projection system 370. As depicted, various optics 2574-1, 2574-2, 2574-3 in the form of lenses are provided to direct the integrated light 2570, 2572 onto the fly's eye integrator t 2504-1, and to direct light output by the fly's eye integrator 2504-1 onto an SLM of a projection system.

In particular, the optics 2574-1, 2574-2 comprise respective plano-convex lenses with the planar side facing the output faces 2556, 2566 to collimate light from the output faces 2556, 2566 onto the fly's eye integrator 2504-1. The optics 2574-3 comprise a biconvex lens to converge light output by the fly's eye integrator2504-1 onto an SLM of a projection system. Indeed, the light output by the fly's eye integrator2504-1 may be about collimated so that the biconvex lens of the optics 2574-3 focuses a collimated spot onto an SLM of a projection system.

However, while a particular set of optics 2574 is depicted, it is understood that any suitable optics are within the scope of the present specification, On particular any such optics between the integrator device 2502 and the fly's eye integrator 2504-1 may be configured to collimate light from the output faces 2556, 2566 onto the fly's eye integrator 2504-1. Furthermore any such optics between the fly's eye integrator 2504-1 and a projection system may be configured to form illumination spot on an SLM of the projection system, and such an illumination spot may comprise an overlay of images formed by the respective lenslets, and/or facets, on the integrator device facing side of the fly's eye integrator 2504-1 (e.g., facing the integrators 2550, 2560).

Indeed, as neither output face 2556, 2566 is centered on the fly's eye integrator 2504-1, the fly's eye integrator is used to integrate the light 2570, 2572.

However, while specific optics 2574 are depicted, any suitable optics may be used. Indeed, further optics may be used between the fly's eye integrator 2504-1 and the biconvex lens to direct the collimated light 2570, 2572 to the biconvex lens.

Attention is first directed to FIG. 25B, which depicts another integration system 2500-2 that comprises a two component integrator device 2502-2 comprising a first integrator 2580 and a second integrator 2581, the second integrator 2581 adjacent the first integrator 2580 (e.g., and/or stacked on the first integrator 2580 and/or arranged lengthwise, relative to the first integrator 2580, in any suitable manner).

The first integrator 2580 comprises an input face 452 and an opposite output face 2584.

Similarly, the second integrator 2581 comprises an input face 2586 and an opposite output face 2588. However, relative to the second integrator 2560 of FIG. 25A, the second integrator 2581 does not include a chamfer.

Furthermore, as depicted, the output faces 2584, 2588 are aligned and/or are parallel to each other and/or are adjacent to each other.

Referring back the first integrator 2580, the input face 2582 may receive light 2592 (e.g., red light and green light, in a sequence) from the combination of a phosphor wheel and a color wheel, similar to as descried with respect to FIG. 4, the first integrator 2580 integrates such light 2590, and the output face 2584 outputs such light 2590, as integrated, to the fly's eye integrator 2504-2.

Similarly, and now referring to the second integrator 2581, the input face 2586 is arranged to receive light 2592 from, for example a blue laser and/or a further laser, the second integrator 2581 integrates such light 2592, and the output face 2588 outputs such light 2592, as integrated, to the fly's eye integrator 2504-2. As depicted, to arrange any blue laser and/or a further laser to be spatially separated from any color wheel used to generate the light 2590 input to the input face 2582 of the first integrator 2580 (and which may be adjacent the input face 2582), a mirror 2593 may be used to direct the light 2592 into the input face 2586 of the second integrator 2581. However, any suitable combination of optics may be used to direct respective light 2590, 2592 into respective input faces 2582, 2586.

Hence, both the integrated light 2590 and the integrated light 2592 are output to the fly's eye integrator 2504-2 (e.g., sequentially), which further integrates the integrated light 2590 and the integrated light 2592 for output to a projection system, similar to the projection system 370. As depicted, various optics 2594-1, 2594-2, 2594-3 in the form of lenses are provided to direct the integrated light 2590, 2592 onto the fly's eye integrator 2504-2, and to direct light output by the fly's eye integrator 2504-2 onto an SLM of a projection system. Put another way, the fly's eye integrators 2504-1, 2504-2 are understood to comprise at least one array of lenslets or facets configured to homogenize angular and spatial distribution of the light received from a composite output face formed by the output faces 2556, 2566. Similarly, the fly's eye integrators 2504-1, 2504-2 are positioned such that respective light from each of a plurality of integrators (e.g., of a respective integrator device 2502) overlaps within the fly's eye integrator 2504. It is further understood that an illumination uniformity at an output of a fly's eye integrator 2504-1, 2504-2 is substantially independent of which of the plurality of integrators (e.g., of a respective integrator device 2502) is actively receiving light at a given time.

In particular, the optics 2594-1, 2594-2 comprise respective plano-convex lenses with the planar side facing the output faces 2584, 2588 to diverge light from the output faces 2584, 2588 onto the fly's eye integrator 2504-2. The optics 2594-3 comprise a biconvex lens to converge light output by the fly's eye integrator 2504-2 onto an SLM of a projection system. Indeed, the light output by the fly's eye integrator 2504-2 may be about collimated so that the biconvex lens of the optics 2594-3 focuses a collimated spot onto an SLM of a projection system.

Indeed, as neither output face 2584, 2588 is centered on the fly's eye integrator 2504-2, the fly's eye integrator is used to collimate the light 2590, 2592.

However, while specific optics 2594 are depicted, any suitable optics may be used. Indeed, further optics may be used between the fly's eye integrator 2504-2 and the biconvex lens to direct the collimated light 2590, 2592 to the biconvex lens.

Hence, in general, the integration systems 2500-1, 2500-2 have similar functionality, and only certain mechanical aspects differ (e.g., the chamfer 2568, the mirror 2593) to direct light into the respective integrators 2550, 2560, 2580, 2581. Indeed, in some examples, chamfers may be used on both integrators of an integration system 2500-1, 2500-2, and/or mirrors, and/or any other suitable optics, may be used to direct light into respective integrators.

Hence, in generally, the integration systems 2500-1, 2500-2 are configured to combine light from various light sources that may overlap spectrally, and which result in a reduction in speckle when lasers are used as a light source (e.g., via a combination of integrators and a fly's eye integrator), while also achieving a desired color gamut. Indeed, these conditions may indicate that spatial combining (e.g., rather than dichroic combining) of light must occur. The use of the two-integrator devices 2502-1, 2502-2 may further enable fitting the various light sources into a relatively compact space that also accommodates an etendue of the systems 2500-1, 2500-2 and/or any the light sources thereof, and/or associated projection systems (e.g., with the etendue split between respective integrator rods thereof).

Furthermore, while each of the integrator devices 2502-1, 2502-2 described herein comprise two respective integrators, integrator devices provided herein may comprise two or more respective integrators, and/or a plurality of respective integrators, for example one respective integrator to receive and integrate light from two or more respective light sources.

Indeed, an integration system provided herein may comprise an integration device comprising two or more integrators that combine light from two or more light sources. Indeed FIG. 25C depicts an integration device 2595 comprising three integrators (e.g., integration rods) 2596-1, 2596-2, 2596-3 stacked on each other, each comprising a respective input face 2597-1, 2597-2, 2597-3 and a respective output face 2598-1, 2598-2, 2598-3. The output faces face 2598-1, 2598-2, 2598-3 are aligned and/or are about parallel and/or about adjacent.

The first and second integrators 2596-1, 2596-2 are substantially similar to the integrators 2580, 2581, while the third integrator 2596-3 is substantially similar to the integrator 2560 and includes a chamfer 2599 468 (e.g., of about 45°). Hence, each integrator 2596-1, 2596-2, 2596-3 may be dedicated to receiving light from a respective light source, such as a combination of a color wheel and phosphor wheel, and two different lasers (e.g., a blue laser and a further laser emitting green and/or red light).

Indeed, FIG. 25C further illustrates that a respective input face 259703 of an outermost integrator 2597-3, of the plurality of integrators 2598, may be located along a respective outer-facing longitudinal side (e.g., a side parallel to the longitudinal axis) of the outermost integrator 2598-3, and the outermost integrator 2596-3 further comprises a chamfer 2599 at an opposite longitudinal side configured to direct light received at the respective input face 2597-3 of the outermost integrator 2598-3towards the respective output face 2597-3 of the outermost integrator 2596-3.

Similarly, FIG. 25D depicts an integration device 2695 comprising four integrators (e.g., integration rods) 2696-1, 2696-2, 2696-3, 2696-4 stacked on each other, each comprising a respective input face 2697-1, 2697-2, 2697-3, 2697-4 and a respective output face 2698-1, 2698-2, 2698-3, 2698-4. The output faces face 2698-1, 2698-2, 2698-3, 2698-4 are aligned and/or are about parallel and/or about adjacent.

The first and second integrators 2696-1, 2696-2 are substantially similar to the integrators 2680, 2682, while the third and fourth integrators 2696-3, 2696-4 are substantially similar to the integrator 2660 and include respective chamfers 26993, 26994 468 (e.g., of about 45° each).

The fourth integrator 2696-4, is shorter than the adjacent third integrator 2696-3 so that the respective input faces 2697-4, 2697-3 are staggered, and so that the input face 2697-3 of the third integrator 2696-3 is not blocked by the fourth integrator 2696-4.

Hence, each integrator 2696-1, 2696-2, 2696-3, 2696-4 may be dedicated to receiving light from a respective light source, such as a combination of a color wheel and phosphor wheel, and three different lasers (e.g., a blue laser and a red laser and a glue laser). Further, one or more shorter, staggered, chamfered integrators may be further stacked on the fourth integrator 2696-4 to accommodate more light sources.

Hence, the integrator devices of FIG. 25A, FIG. 25B, FIG. 25C and FIG. 25D are understood to receive light from at least a first optical path corresponding to phosphor-generated light; and a second optical path corresponding to laser-generated light.

It is further understood that in the integrator devices described herein, input faces are configured to receive light from a light source at about a normal angle (e.g., about 90°).

Hence, the integrator devices of FIG. 25A, FIG. 25B, FIG. 25C and FIG. 25D are understood to illustrate an integrator device comprising: a plurality of integrators arranged adjacent to each other, each integrator comprising a respective input face and a respective output face, wherein the plurality of integrators are arranged such that the respective output faces collectively define a composite output face; and a fly's eye integrator positioned to receive respective integrated light from the respective output faces, wherein the plurality of integrators are configured to receive respective incident light from different light sources at a respective input face, integrate the respective incident light and to provide the respective integrated light to the fly's eye integrator such that the fly's eye integrator outputs homogenized light suitable for illuminating a spatial light modulator.

For example, light suitable for illuminating a spatial light modulator, such as a DMD, may include light having one or more of an intensity distribution, angular distribution, spatial uniformity, etendue, and spectral content appropriate for use in illuminating the spatial light modulator such that the spatial light modulator can modulate the light to form an image. Such suitability may be heuristically determined and/or may be defined by a specification of a given spatial light modulator (e.g., a DMD) and/or a given projection system. For example, in a DMD-based projection system, light suitable for illuminating a DMD may be sufficiently uniform across an illumination field at the DMD (for example with a spatial illumination non-uniformity of less than about one or more of 5%, 10%, 20%, amongst other possibilities) may have an angular spread within an acceptance cone of projection optics associated with the DMD, and may have an etendue that does not exceed an etendue supported by the DMD and the projection optics. Indeed, a fly's eye integrator may be selected which supports these properties.

Hence, it may be desirable to combine light from a plurality of light sources that at least partially overlap spectrally, for example to simultaneously achieve reduced speckle (e.g., when laser light sources are used) and a desired color gamut. In such cases, dichroic combining of the light sources may be unsuitable, and spatial combining of the light sources may instead be implemented.

However, spatial combining of spectrally overlapping light sources presents challenges, particularly in maintaining compact system architecture and accommodating the etendue of an illumination system and associated projection optics. For example, directing multiple light sources into a single integrator at different angles may provide spatial uniformity at an output of the integrator, but may result in angular separation of the respective light sources in pupil space. Such angular separation can effectively split the pupil and may introduce undesirable color artifacts in projected images, for example dependent on image content.

To address these challenges, the light integration systems described herein utilize a plurality of adjacent integrators (e.g., integration rods), each configured to receive light from a respective light source, in combination with a further integration component (e.g., a fly's eye integrator). In particular, the plurality of integrators may be arranged such that their respective output faces are aligned and/or adjacent, and collectively act as a source for the further integration component.

In particular, use of a fly's eye integrator may be particularly advantageous for providing a compact system architecture. Indeed, such a fly's eye integrator may receive light from a plurality of integrators and performs additional spatial and angular homogenization, thereby forming a substantially uniform illumination field (e.g., a light patch) at an image forming device, such as an SLM, for example a DMD, for projection in a compact space (e.g., relative to use of another integrating rod).

In such configurations, separation of light from the respective light sources in pupil space is reduced relative to systems in which multiple sources are injected into a single integrator at differing angles. As a result, the illumination system may exhibit image quality characteristics similar to high-performance projection systems, while still enabling spatial combination of spectrally overlapping sources for speckle reduction and color gamut performance.

Accordingly, the combination of multiple adjacent integrators with a further integration component, and a fly's eye integrator in particular, provides a compact architecture that accommodates system etendue, enables spatial combining of multiple light sources, and mitigates angular separation effects that could otherwise degrade image quality.

Indeed, while a combination of multiple adjacent integrators with a further integration component, and a fly's eye integrator in particular, is described herein with respect to 1DLP systems, such a combination of multiple adjacent integrators with a further integration component, and a fly's eye integrator in particular may be used with 3DLP (three-chip Digital Light Processing) systems in which a dichroic/prism combination separates white light into red, green and blue light used to illuminate three SMLs (e.g., three DMDs). In these examples, a combination of multiple adjacent integrators with a further integration component, and a fly's eye integrator in particular (e.g., as depicted in any of FIG. 25A, FIG. 25B, FIG. 25C, FIG. 25) may be used to simultaneously combine and integrate from a plurality of light sources generating red, green and blue light. Put another way, any of the light integration devices of FIG. 25A, FIG. 25B, FIG. 25C, FIG. 25, in combination with a further integration component, and a fly's eye integrator in particular, may simultaneously receive red, green and blue light at input faces of two or more integrators, integrate such light, which is output to a fly's eye integrator, which further integrates such light. It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that there are yet more alternative examples and modifications possible, and that the above examples are only illustrations of one or more examples. The scope, therefore, is only to be limited by the claims appended hereto.

## Claims

1. A device comprising:
a pump laser;
a phosphor wheel comprising one or more phosphors that emit light when illuminated by the pump laser;
a color wheel comprising alternating color segments of a first color and a second color, wherein the color wheel is arranged to receive the light from the phosphor wheel in an illumination region through which the alternating color segments rotate, wherein the alternating color segments of the first color and the second color respectively filter the light from the phosphor wheel to respectively output green light and red light;
a blue laser configured to generate blue light;
a controller configured to:
turn the pump laser off and the blue laser on as a spoke, joining a first color segment and a second color segment of the color wheel, approaches the illumination region; and
turn the pump laser on and the blue laser off when the spoke is no longer in the illumination region; and
an integrator configured to receive and integrate the green light, the red light and the blue light.

2. The device of claim 1, wherein the phosphor wheel comprises alternating phosphor segments, of different respective phosphors, that emit at different wavelengths when illuminated by the pump laser, and the light emitted by the alternating phosphor segments comprises first light and second light of the different wavelengths,
wherein the color wheel is arranged to receive the first light and the second light in the illumination region through which the alternating color segments rotate, and
wherein the alternating color segments of the first color and the second color respectively filter the first light and the second light to respectively output the green light and the red light.

3. The device of claim 1, further comprising one or more further lasers configured to generate one or more of respective red light and respective green light,
wherein the first color and the second color of the color wheel respectively comprise green and red,
wherein the integrator is configured to receive and integrate the green light, the red light, the blue light, and one or more of the respective red light and the respective green light, and
and wherein the controller is further configured to: control the one or more further lasers to generate the respective red light when the red light is being output by the color wheel; and control the one or more further lasers to generate the respective green light when the green light is being output by the color wheel.

4. The device of claim 3, wherein the integrator includes a first input face, a second input face about perpendicular to the first input face, and an output face disposed at an end of the integrator opposite an end at which the first and second input faces are located,
wherein the first input face is arranged to receive the green light and the red light from the color wheel, and the second input face is arranged to receive the blue light, the respective red light and the respective green light from the further laser, and
wherein the integrator is further configured to direct the green light, the red light, the blue light, the respective red light and the respective green light towards the output face.

5. The device of claim 1, wherein the controller is further configured to:
control one or more respective time periods that the blue laser and the pump laser are on and off to control one or more respective intensities of the blue light, the green light and the red light.

6. The device of claim 1, wherein the controller is further configured to:
control one or more respective intensities of one or more of the blue laser and the pump laser to control one or more respective intensities of the blue light, the green light and the red light.

7. The device of claim 1, wherein the controller is further configured to:
control one or more respective intensities of one or more of the blue laser and the pump laser to control a white point of light output by a projection system that receives the blue light, the green light and the red light.

8. The device of claim 1, wherein the controller is further configured to:
turn the pump laser off and the blue laser on as the illumination region approaches the spoke joining a first color segment and a second color segment; and
maintain the pump laser off and maintain the blue laser on for a duration that is longer than a spoke transition time associated with the spoke passing through the illumination region.

9. The device of claim 1, wherein the controller is further configured to:
turn the pump laser on as a first color segment or a second color segment is in the illumination region, wherein the blue laser is off while the pump laser is on.

10. The device of claim 1, wherein the phosphor wheel comprises alternating phosphor segments, of different respective phosphors, that emit at different wavelengths when illuminated by the pump laser, and the light emitted by the alternating phosphor segments comprises first light and second light of the different wavelengths, and
wherein respective rotation of the phosphor wheel and the color wheel are coordinated such that the first light emitted by the phosphor wheel passes through first color segments, and the second light emitted by the phosphor wheel passes through second color segments.

11. The device of claim 1, further comprising:
a spatial light modulator; and
optics arranged to direct the blue light, the green light and the red light exiting the integrator to illuminate the spatial light modulator.

12. The device of claim 1, wherein the pump laser emits at about 455 nm, and wherein the blue laser emits at about 465 nm or at about 455 nm.

13. The device of claim 1, wherein the color wheel is rotated at a speed such that a color cycle rate of at least 15x is achieved.

14. The device of claim 1, wherein the color wheel is rotated above a threshold speed such that color breakup is reduced or eliminated as compared to speeds below the threshold speed.

15. The device of claim 1, wherein first color segments and second color segments of the color wheel are about equal in size or the first color segments and the second color segments of the color wheel are unequal in size.
